# EUROPEAN PATENT SPECIFICATION

(11) **EP 4 485 128 B1**
(45) Date of publication and mention of the grant of the patent: **03.06.2026**
(21) Application number: 24705343.2
(22) Date of filing: 13.02.2024
(51) Int. Cl.: G06F 1/16, H04M 1/02

(54) **FOLDABLE ELECTRONIC DEVICE COMPRISING HINGE STRUCTURE**
KLAPPBARE ELEKTRONISCHE VORRICHTUNG MIT SCHARNIERSTRUKTUR
DISPOSITIF ÉLECTRONIQUE PLIABLE COMPRENANT UNE STRUCTURE DE CHARNIÈRE

(30) Priority: 09.05.2023 KR 20230059608; 26.05.2023 KR 20230068218; 24.10.2023 KR 20230142765
(43) Date of publication of application: 01.01.2025
(73) Proprietor: Samsung Electronics Co., Ltd., Suwon-si, Gyeonggi-do 16677 (KR)
(72) Inventor: KIM, Dooryong, Suwon-si, Gyeonggi-do 16677 (KR)
(74) Representative: HGF
(86) International application number: PCT/KR2024/001998
(87) International publication number: WO 2024/232512

(56) References cited:
- KR-A- 20220 016 591
- KR-A- 20220 119 124
- KR-A- 20220 159 111
- KR-B1- 102 419 474
- US-A1- 2022 377 919
- US-B1- 10 824 197
- US-B2- 11 223 710

## Description

### [TECHNICAL FIELD]

Various embodiments of the disclosure described herein relate to a foldable electronic device including a hinge structure.

### [BACKGROUND ART]

A portable electronic device such as a smartphone may provide a call function and various contents search and provision functions based on various types of applications. In a process of providing the various functions, the portable electronic device may output screens corresponding to the respective functions. A user may want to use a wider screen when using the various functions. However, in a general portable electronic device, the overall size may be increased when a display device is enlarged to display a screen, and therefore portability may be deteriorated. Accordingly, a foldable portable electronic device is provided so as to increase the size of a screen while maintaining portability. The foldable portable electronic device may have folded and unfolded states. A user may unintentionally and frequently miss the foldable electronic device while using the foldable electronic device. Due to this, impact may be applied to the foldable electronic device. For example, impact may be applied to an internal structure of the foldable electronic device, and the internal structure may be damaged
US 2022377919 discloses a rotating module and electronic device. US 11223710 discloses a hinge of a mobile terminal having an inward-foldable flexible screen and a mobile terminal having an inward-foldable flexible screen. KR 20220159111 discloses a foldable electronic device. KR 20220016591 discloses an electronic device including flexible printed circuit board.

### [DETAILED DESCRIPTION OF THE INVENTION]

### [TECHNICAL SOLUTION]

The invention is set out in the independent claim 1, preferred forms being set out in the dependent claims 2-13.

### [DESCRIPTION OF THE DRAWINGS]

FIG. 1 is an exploded perspective view of a foldable electronic device according to an embodiment.
FIG. 2 is a view illustrating a hinge structure in a folded state according to an embodiment as viewed in the z-axis direction.
FIG. 3 is a view illustrating the hinge structure in the folded state according to an embodiment as viewed in the x-axis direction.
FIG. 4 is a view illustrating the hinge structure in the folded state according to an embodiment as viewed in the y-axis direction.
FIG. 5 is an exploded perspective view of the hinge structure according to an embodiment.
FIG. 6 is a view illustrating an example of a fixed bracket of the hinge structure according to an embodiment.
FIG. 7 is a view illustrating an example of rotation members of the hinge structure according to an embodiment.
FIG. 8 is a view illustrating an example of link members of the hinge structure according to an embodiment.
FIG. 9 is a view illustrating an example of arm members of the hinge structure according to an embodiment.
FIG. 10 is a view illustrating an example of cam members and an interlocking member of the hinge structure according to an embodiment.
FIG. 11 is a view illustrating an example of a second housing according to an embodiment.
FIG. 12 is a view illustrating an example of the second housing according to an embodiment.
FIG. 13 is a view illustrating an example of a folded state of the foldable electronic device having hinge structures applied thereto according to an embodiment.
FIG. 14 is a sectional view of one side of the foldable electronic device described in one embodiment of the disclosure, where the sectional view is taken along line A-A' in FIG. 13.
FIG. 15 is a view illustrating some components of a hinge structure coupled with a first housing among components of the foldable electronic device illustrated in one embodiment of the disclosure.
FIG. 16 is a view illustrating an example of a partial section of the foldable electronic device in an unfolded state according to an embodiment.
FIG. 17 is a view illustrating an example of deformation of a first foldable electronic device having no reinforcing structure due to impact according to an embodiment.
FIG. 18 is a view illustrating an example of deformation of a second foldable electronic device including a reinforcing structure due to impact according to an embodiment.

### [BEST MODE]

Hereinafter, various embodiments of the disclosure will be described with reference to the accompanying drawings.

The various embodiments of the disclosure present hinge structures and surrounding structures that prevent damage to internal structures or enable the internal structures to more robustly respond to impact even in an environment in which impact is applied to a foldable electronic device.

Other aspects according to embodiments of the disclosure will be mentioned as needed in a process of describing the embodiments.

A foldable electronic device including hinge structures according to an embodiment, which will be described below, has a dumbbell-type folding structure that supports folding the foldable electronic device with a parallel gap.

Various other aspects and effects provided by the foldable electronic device including the hinge structures according to various embodiments may be mentioned depending on embodiments in the detailed description of the disclosure. The implementations described below are not all claimed, they are included to help understanding the context of the invention. While the description often refers of embodiments, the embodiments of the invention are those which comprise at least all the features of an independent claim. Any embodiment which does not fall within the scope of the claims does not form part of the invention, but is rather included as an illustrative example that is useful for understanding the invention.

Certain examples provide a foldable electronic device comprising:
a first housing (110) and a second housing (120);
a hinge structure (200a) configured to couple the first housing (110) to the second housing (120) in a foldable configuration; and
a foldable display (160) partly disposed in the first housing (110) and partly disposed in the second housing (120),
wherein the first housing (110) and the second housing (120) each comprises a reinforcing structure (111, 121) disposed in an area along a side of the housing (110, 120) to which the hinge structure (200a) is coupled.

In certain examples, each reinforcing structure (111, 121) may comprise one or more rib members.

In certain examples, the hinge structure (200a) may comprise:
a middle bracket (210);
a first attachment member (211, 231) rotatably connected to a first edge of the middle bracket (210) and attached to the first housing (110); and
a second attachment member (212, 232) rotatably connected to a second edge of the middle bracket (210) and attached to the second housing (120).

In certain examples, the hinge structure (200a) may be configured to form a space when the device is in a folded state to accommodate a folded portion of the display (160) with a radius of curvature greater than a certain threshold.

In certain examples, the hinge structure (200a) may be configured such that, when the device is in a folded state, a gap between the first (211, 231) and second (212,232) attachment members is larger in a first location adjacent to the middle bracket (210) than in a second location further away from the middle bracket (210).

In certain examples,
the first housing (110) and the second housing (120) may each comprise a first protrusion part (111, 121),
the first attachment member (21, 231) and second attachment member (212, 232) may each comprise a second protrusion part (231_4b, 232_4b), and
each first protrusion part (111, 121) may be configured to engage with a respective second protrusion part (231_4b, 232_4b) to limit relative movement between the housings (110, 120) and respective attachment members (211, 231, 212, 232) in a direction towards or away from the middle bracket (210) when an external force is applied to the device.

In certain examples, each first protrusion part (111, 121) may formed from at least a part of a respective reinforcing structure (111, 121).

In certain examples, each attachment member (211, 231, 212, 232) may comprise:
a first part (211, 231, 212, 232) coupled to the middle bracket; and
a second part (221-224) attached to the housing,
wherein the first and second parts of each attachment member are slidably connected such that the second part (221-224) is slidable relative to the first part (211, 231, 212, 232) in a direction towards or away from the middle bracket (210).

In certain examples, the second protrusion parts (231_4b, 232_4b) may be provided on the first parts (231, 232) of the attachment members (211, 231, 212, 232).

In certain examples, the first (211, 231, 212, 232) and second (221-224) parts of the attachment members may be configured to be slidable such that a gap of a first size exists between the first (111, 121) and second (231_4b, 232_4b) protrusion parts when the device is in an unfolded state, and a gap of a second size smaller than the first size exists between the first (111, 121) and second (231_4b, 232_4b) protrusion parts when the device is in a folded state.

In certain examples, the device may further comprise a hinge housing (150) in which the hinge structure (200a) is disposed.

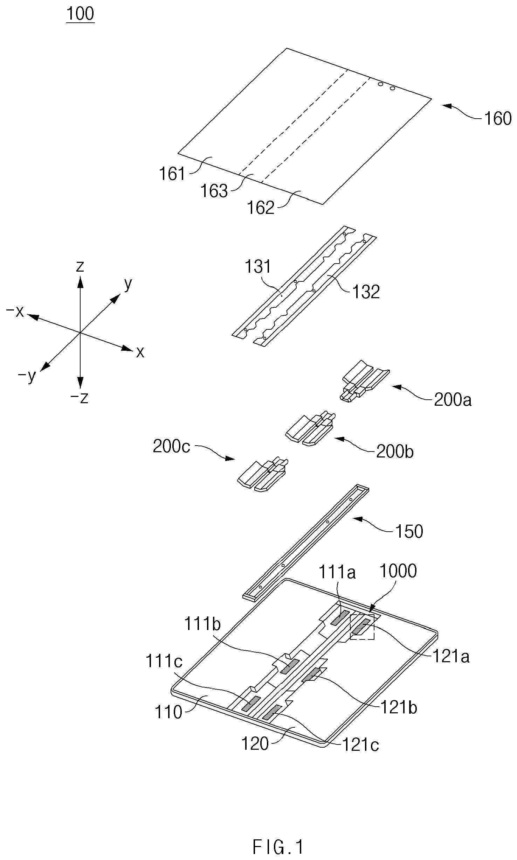

FIG. 1 is an exploded perspective view of the foldable electronic device according to an embodiment.

Referring to FIG. 1, the foldable electronic device 100 according to an embodiment (or, an electronic device, a portable electronic device, a portable communication device, a foldable electronic device, or a portable device) may include a first housing 110, a second housing 120, a hinge housing 150, wing plates 131 and 132 (or, plates), a display 160, and one or more hinge structures 200a, 200b, and 200c.

In a folded state, a folding region of the display 160 may form a water-drop shape (or, a water-drop or dumbbell shape convex in the rear direction when viewed from the front direction to the rear direction of the display 160), and thus the foldable electronic device 100 may secure a folding R (curvature) that prevents cracks or buckling in the folding region of the display 160. In addition, the folding region of the display 160 having a dumbbell shape may be disposed in a certain space of the housings 110 and 120, and thus a clearance between the housings 110 and 120 disposed in the shape of "11" when the foldable electronic device 100 is in the folded state may be maintained at a reference value or less or may be reduced when compared to a clearance in a previous foldable electronic device. Accordingly, the gap between the housings 110 and 120 of the foldable electronic device 100 may be reduced, and a reduction in the overall size of the foldable electronic device 100 and interruption or reduction of infiltration of foreign matter between the housings 110 and 120 may be achieved. The foldable electronic device 100 having the above-described structure may include reinforcing structures 111a, 111b, and 111c or 121a, 121b, and 121c (or, mounting structures or ribs) of at least one of the housings 110 and 120 and thus may reduce movement of the one or more hinge structures 200a, 200b, and 200c while external impact is applied to the foldable electronic device 100, thereby preventing or reducing damage to internal structures of the foldable electronic device 100.

The first housing 110 may be connected with the second housing 120 through the one or more hinge structures 200a, 200b, and 200c. The first housing 110 may include a bottom region that the display 160 is seated on (or, disposed adjacent to or stacked on) and sidewalls or separately provided frames that are disposed at the edges of the bottom region and that surround the periphery of the display 160 or the edges of the region where the display 160 is disposed. In addition, a back cover may be disposed on the rear surface of the first housing 110. Here, the back cover may be omitted. At least a portion of the first housing 110 may be attached with a first region 161 of the display 160. Alternatively, some of the edges of the front surface of the first housing 110 may be attached with at least some of the edges of the first region 161 of the display 160. In this regard, an adhesive layer may be disposed between the front surface of the first housing 110 and the first region 161 of the display 160.

At least a portion of the inside of the first housing 110 may be provided in a hollow form. At least one of at least one circuit board, at least one battery, or at least one camera module may be disposed in the first housing 110. The circuit board and the battery disposed in the first housing 110 may be electrically connected with at least one circuit board and at least one battery disposed in the second housing 120 through a flexible circuit board (not illustrated). For example, the flexible circuit board (not illustrated) may extend from a partial region of the first housing 110 to a partial region of the second housing 120 across the hinge housing 150. A partial region of the flexible circuit board (not illustrated) may be located in the hinge housing 150. For example, a processor and a memory may be disposed on the circuit board disposed in the first housing 110.

At least a portion of the first housing 110 may be formed of a metallic material, or at least a portion of the first housing 110 may be formed of a non-metallic material. The first housing 110 may be formed of a material having a predetermined magnitude of rigidity to support at least a portion of the display 160. In an embodiment, a portion of the first housing 110 that faces the second housing 120 when the foldable electronic device 100 is in an unfolded state may include a depression at least partially recessed such that the hinge housing 150 is disposed therein.

The first housing 110 may be connected to the one or more hinge structures 200a, 200b, and 200c and may be rotated in the clockwise or counterclockwise direction by external pressure applied from the outside to move from any point rather than 0 between the -x-axis and the x-axis to any point between the z-axis and the -z-axis. In the folded state of the foldable electronic device 100, the first housing 110 may be disposed parallel to the z-axis, or may be disposed parallel to the second housing 120. While the first housing 110 is disposed parallel to the second housing 120, at least a part of three borders (or, edges) of the first housing 110 (e.g., the remaining borders other than the border adjacent to the second housing 120 in the unfolded state of the foldable electronic device) may be disposed to make contact with three borders of the second housing 120 (e.g., the remaining borders other than the border adjacent to the first housing 110 in the unfolded state of the foldable electronic device 100).

The first housing 110 may include the reinforcing structures 111a, 111b, and 111c (or, the first reinforcing structure group) for preventing or reducing movement of at least some components of the one or more hinge structures 200a, 200b, and 200c. For example, the reinforcing structures 111a, 111b, and 111c may protrude from the bottom surface of the first housing 110 in the z-axis direction by a pre-defined height. The heights of the reinforcing structures 111a, 111b, and 111c may be less than the height of the highest portion of the bottom surface of the first housing 110 in the z-axis direction. The reinforcing structures 111a, 111b, and 111c may be formed side by side in the y-axis or - y-axis direction. Alternatively, the reinforcing structures 111a, 111b, and 111c may be formed such that the length in the y-axis direction is longer than the length in the x-axis direction. In various embodiments, the reinforcing structures 111a, 111b, and 111c may have a dot shape or a dome shape.

The reinforcing structures 111a, 111b, and 111c may be formed adjacent to a portion of the first housing 110 that is adjacent to the second housing 120 or a portion of the first housing 110 that the hinge housing 150 is disposed on. Alternatively, at least one of the reinforcing structures 111a, 111b, and 111c may be disposed on the bottom surface of the housing (or, at least one of the first housing 110 or the second housing 120) that is formed to be lower than the surrounding region such that the hinge housing 150 is disposed thereon (or, adjacent thereto). The number of reinforcing structures 111a, 111b, and 111c may correspond to the number of hinge structures 200a, 200b, and 200c. Among the reinforcing structures 111a, 111b, and 111c, the first reinforcing structure 111a may be used to support one side of the first hinge structure 200a. Among the reinforcing structures 111a, 111b, and 111c, the second reinforcing structure 111b may be used to support one side of the second hinge structure 200b, and the third reinforcing structure 111c may be used to support one side of the third hinge structure 200c. The reinforcing structures 111a, 111b, and 111c may be formed of a material (e.g., a metallic material or a conductive material) that is the same as that of the first housing 110. Alternatively, the reinforcing structures 111a, 111b, and 111c may be formed of a separate moldable material. The reinforcing structures 111a, 111b, and 111c may all be formed of the same material or may be formed of different materials. Meanwhile, FIG. 1 illustrates the structure in which the reinforcing structures 111a, 111b, and 111c corresponding to the three hinge structures 200a, 200b, and 200c, respectively, are disposed. However, the disclosure is not limited thereto. For example, the second reinforcing structure 111b may be excluded, and the first housing 110 may include only the first reinforcing structure 111a and the third reinforcing structure 111c that correspond to the first hinge structure 200a and the second hinge structure 200b. The term "adjacent" used in various embodiments may include the meaning of "separation" and/or "contact". For example, the reinforcing structures 111a, 111b, and 111c may be spaced apart from or brought into contact with the portion of the first housing 110 that is adjacent to the second housing 120 or the portion of the first housing 110 that the hinge housing 150 is disposed on (or, adjacent to) (or, the portion of the housing that the hinge housing 150 is seated or disposed on when the foldable electronic device 100 is in the unfolded state).

The second housing 120 may be connected with the first housing 110 through the one or more hinge structures 200a, 200b, and 200c. The second housing 120 may include a front surface that at least a portion (e.g., a second region 162) of the display 160 is disposed on (or, seated on, stacked on, or adjacent to) and frames that surround at least a portion of the periphery of the front surface of the second housing 120 or the second region 162 of the display 160. At least a portion of the second housing 120 may be attached with the second region 162 of the display 160. Alternatively, some of the edges of the front surface of the second housing 120 may be attached with some of the edges of the second region 162 of the display 160. In this regard, an adhesive layer may be disposed between the front surface of the second housing 120 and the second region 162 of the display 160.

Similarly to the first housing 110, the second housing 120 may have a hollow formed in at least a portion thereof. At least one circuit board and at least one battery may be disposed in the second housing 120. Alternatively, at least one battery may be disposed in one of the first housing 110 and the second housing 120, or may be disposed in both the first housing 110 and the second housing 120. At least one of the printed circuit board or the battery disposed in the second housing 120 may be electrically connected with a component (e.g., at least one of the printed circuit board or the battery) disposed in the first housing 110 through the flexible circuit board.

Similarly to the first housing 110, at least a portion of the second housing 120 may be formed of a metallic material, or at least a portion of the second housing 120 may be formed of a non-metallic material. The second housing 120 may be formed of a material having a predetermined magnitude of rigidity to support at least a portion of the display 160. In an embodiment, a portion of the second housing 120 that faces the first housing 110 (or, a portion of the second housing 120 that is adjacent to the first housing 110) when the foldable electronic device 100 is in the unfolded state may include a depression (e.g., a recess portion) at least partially recessed such that the hinge housing 150 is disposed therein. The depression of the second housing 120 may be disposed adjacent to the depression of the first housing 110. A back cover may be disposed on the rear surface of the second housing 120. Here, the back cover may be omitted.

The second housing 120 may include the reinforcing structures 121a, 121b, and 121c (or, the second reinforcing structure group) for preventing or reducing movement of at least some components of the one or more hinge structures 200a, 200b, and 200c. For example, the reinforcing structures 121a, 121b, and 121c may protrude from the bottom surface of the second housing 120 in the z-axis direction by a pre-defined height and may have a height less than the height of the bottom portion of the second housing 120 to which the display 160 is attached. The reinforcing structures 121a, 121b, and 121c may be formed side by side in the y-axis or -y-axis direction and may be disposed parallel to the reinforcing structures 111a, 111b, and 111c with respect to the y-axis. The reinforcing structures 121a, 121b, and 121c may be disposed to be symmetrical to the reinforcing structures 111a, 111b, and 111c in the left and right directions (e.g., in the -x-axis and x-axis directions) with respect to a y-axis region where the first housing 110 and the second housing 120 are in contact with each other when the foldable electronic device 100 is in the unfolded state. A third region 163 of the display 160 may be disposed in a region between the first housing 110 and the second housing 120. The third region 163 of the display 160 may remain in an unattached state.

Similarly to the reinforcing structures 111a, 111b, and 111c, the reinforcing structures 121a, 121b, and 121c may be formed such that the length in the y-axis direction is longer than the length in the x-axis direction, or may have a dot shape or a dome shape. At least one of the reinforcing structures 121a, 121b, and 121c may be disposed on a portion of the second housing 120 that is adjacent to the first housing 110, a portion of the second housing 120 that the housing 150 is disposed on (or, adjacent to) (or, a portion facing the rear surface of the hinge housing 150 when the foldable electronic device 100 is in the unfolded state or a portion that the hinge housing 150 is seated on or adjacent to when the foldable electronic device 100 is in the unfolded state), or a bottom portion of the second housing 120 formed to be lower than the surrounding region such that the hinge housing 150 is disposed (or, seated) thereon. Among the reinforcing structures 121a, 121b, and 121c, the fourth reinforcing structure 121a (or, the first reinforcing structure of the second housing 120) may be used to support an opposite side of the first hinge structure 200a, the fifth reinforcing structure 121b (or, the second reinforcing structure of the second housing 120) may be used to support an opposite side of the second hinge structure 200b, and the sixth reinforcing structure 121c (or, the third reinforcing structure of the second housing 120) may be used to support an opposite side of the third hinge structure 200c. The reinforcing structures 121a, 121b, and 121c may be formed of a material (e.g., a metallic material or a moldable material) that is the same as that of the reinforcing structures 111a, 111b, and 111c. Alternatively, the reinforcing structures 121a, 121b, and 121c may all be formed of the same material, or at least one of the reinforcing structures 121a, 121b, and 121c may be formed of a material different from that of the other reinforcing structures. Meanwhile, although FIG. 1 illustrates the structure in which the three reinforcing structures 121a, 121b, and 121c are disposed, the disclosure is not limited thereto. For example, the reinforcing structures 121a, 121b, and 121c may include less than three reinforcing structures or four or more reinforcing structures.

When the foldable electronic device 100 is in the unfolded state, at least a portion of the hinge housing 150 may be disposed in the depressions formed on the portions of the first housing 110 and the second housing 120 that face each other or are adjacent to each other. The hinge housing 150 may be provided in a form extending longer in the y-axis direction that in the x-axis direction. However, the disclosure is not limited thereto, and the hinge housing 150 may have a form longer in the x-axis direction than in the y-axis direction depending on the type of the foldable electronic device 100. Structures (e.g., bosses or hooks) for fixing the one or more hinge structures 200a, 200b, and 200c may be disposed on partial regions of the inner surface of the hinge housing 150. The hinge housing 150 may be spaced apart from the reinforcing structures 111a, 111b, and 111c and the reinforcing structures 121a, 121b, and 121c at a certain interval. For example, in the unfolded state of the foldable electronic device 100, the reinforcing structures 111a, 111b, and 111c and the reinforcing structures 121a, 121b, and 121c may be located so as not to overlap the hinge housing 150 when viewed from the front surface of the display 160.

At least a portion of the display 160 may have flexibility. For example, the display 160 may include the first region 161 at least partially disposed over the first housing 110, the second region 162 at least partially disposed over the second housing 120, and the third region 163 (or, the bending region or the folding region) located between the first region 161 and the second region 162. The display 160 may be placed over the first housing 110 having the reinforcing structures 111a, 111b, and 111c formed thereon, the one or more hinge structures 200a, 200b, and 200c, and the second housing 120 having the reinforcing structures 121a, 121b, and 121c formed thereon. Accordingly, when the foldable electronic device 100 is in the unfolded state, the reinforcing structures 111a, 111b, and 111c and the reinforcing structures 121a, 121b, and 121c may be located under the display 160.

When the foldable electronic device 100 is in the folded or unfolded state, at least a portion of the first region 161 and at least a portion of the second region 162 may be disposed in a flat state, and when the foldable electronic device 100 is in the folded state, at least a portion of the third region 163 may have a bent state. For example, the first region 161 and the second region 162 may remain in a flat state regardless of the state of the foldable electronic device 100 (the positions of flat surfaces being changed), and the third region 163 may be deformed into a bent state or a flat state depending on the state of the foldable electronic device 100. For example, when the foldable electronic device 100 is in the unfolded state, the third region 163 may have a planar state (or, a flat state), and when the foldable electronic device 100 is in the folded state, at least a portion of the third region 163 may have a curved state (or, a bent state).

The display 160 may include various layers. For example, the display 160 may include an outer protective layer (or, a glass layer or a polymer layer) having a predetermined transparency and a specified size, a display panel layer that is disposed under the outer protective layer and that displays a screen, and at least one first back layer disposed under the display panel layer. The first back layer (or, the first back panel or the first back portion) may include at least one of an impact absorbing layer (or, embo) or a heat radiating layer (or, a metal sheet layer). Additionally or alternatively, the first back layer may further include an electromagnetic induction panel (e.g., a digitizer). The display 160 may further include a second back layer disposed under the first back layer. The second back layer (or, the second back panel or the second back portion) may include at least one metal layer (or, metal sheet), at least a portion of which is formed of a metallic material. The second back layer may include a specified pattern (e.g., a lattice pattern or a slit pattern) such that at least a portion thereof is able to be bent. Alternatively, at least a portion of the second back layer may be formed of another bendable material (e.g., a polymer material, rubber, or a leather material). At least one of the first back layer or the second back layer may be omitted.

The one or more hinge structures 200a, 200b, and 200c may be disposed on the hinge housing 150, and at least some of the hinge structures 200a, 200b, and 200c may have structures and forms that are similar to each other but different from the structure and form of the remaining hinge structure. Alternatively, the three hinge structures 200a, 200b, and 200c may all have the same structure or similar structures and may be arranged in different directions. Meanwhile, although FIG. 1 illustrates the form in which the three hinge structures 200a, 200b, and 200c are disposed, two hinge structures or four or more hinge structures may be disposed in the foldable electronic device 100.

The wing plates 131 and 132 may be placed on or coupled with the one or more hinge structures 200a, 200b, and 200c and may cover surfaces of the one or more hinge structures 200a, 200b, and 200c facing in the z-axis direction when the foldable electronic device 100 is in the unfolded state. The wing plates 131 and 132 may be provided in a form separated from the housings 110 and 120. Accordingly, gaps may be formed between the wing plates 131 and 132 and the housings 110 and 120. The wing plates 131 and 132 may be disposed to correspond to at least a portion of the lower surface (e.g., a surface facing in the -z-axis direction) of the third region 163 of the display 160. The wing plates 131 and 132 may rotate in the clockwise or counterclockwise direction depending on hinge operations of the one or more hinge structures 200a, 200b, and 200c. For example, while the first wing plate 131 rotates in the counterclockwise direction, the second wing plate 132 may rotate in the clockwise direction, and while the first wing plate 131 rotates in the clockwise direction, the second wing plate 132 may rotate in the counterclockwise direction. The first wing plate 131 may support a first flat surface of the third region 163 of the display 160 that is folded in a dumbbell shape, and the second wing plate 132 may support a second flat surface (a surface symmetrical to the first surface with respect to the z-axis) of the third region 163 of the display 160 that is folded in a dumbbell shape.

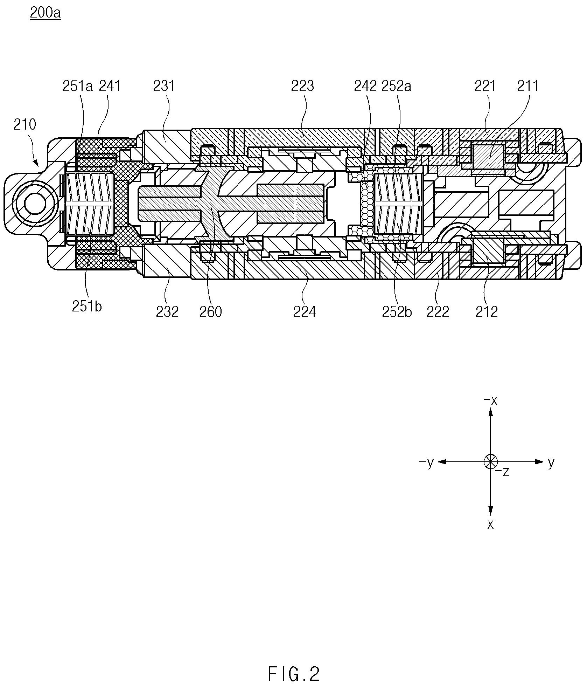

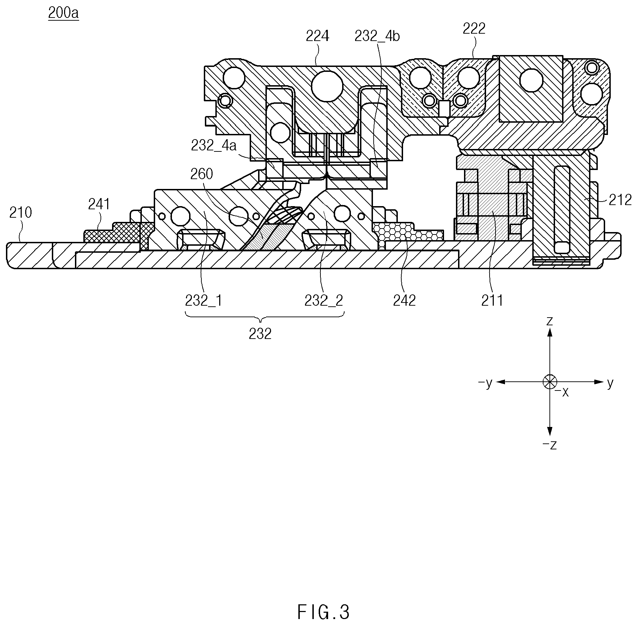

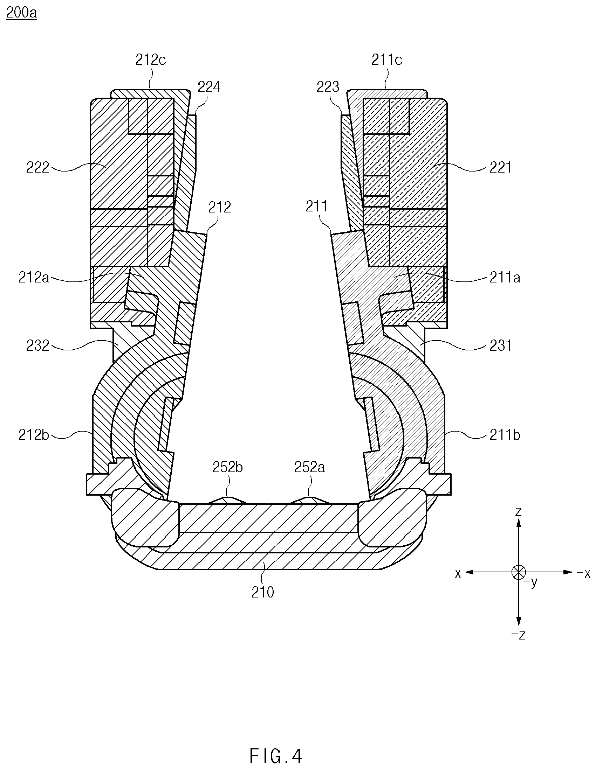

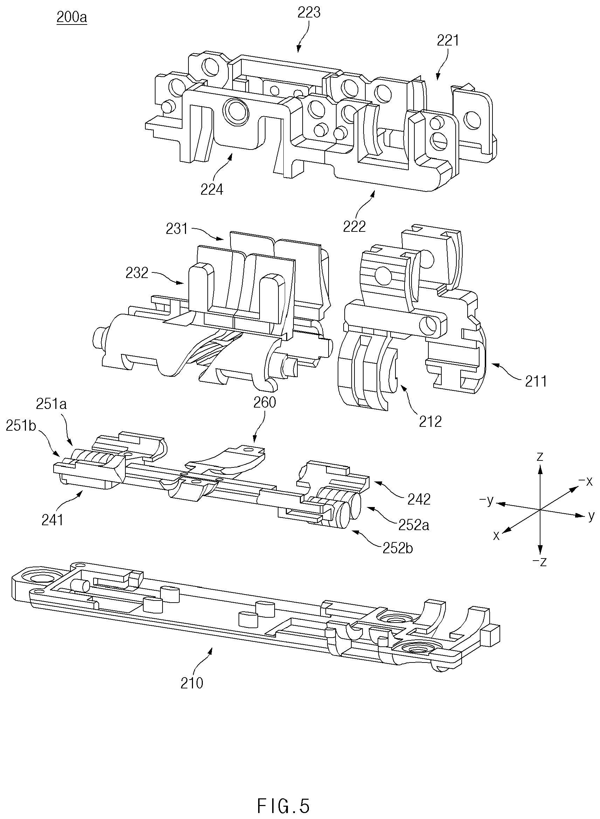

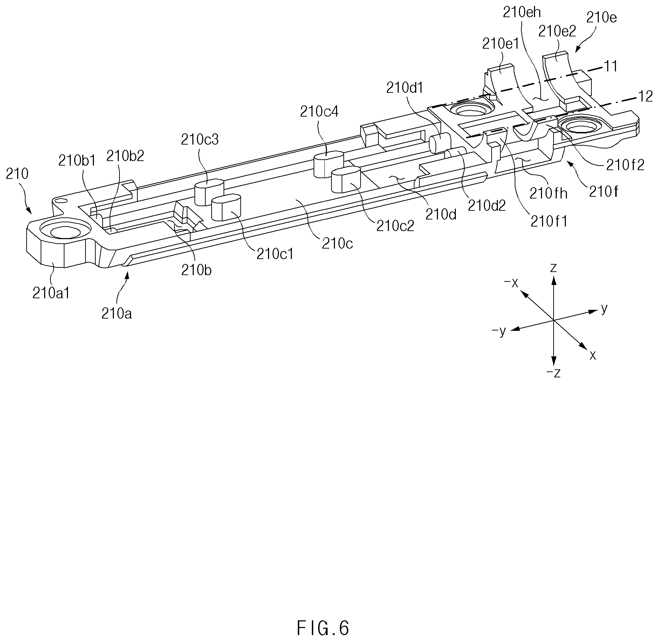

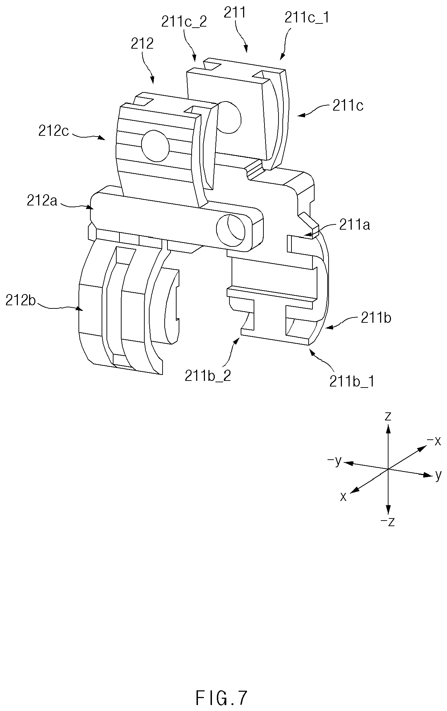

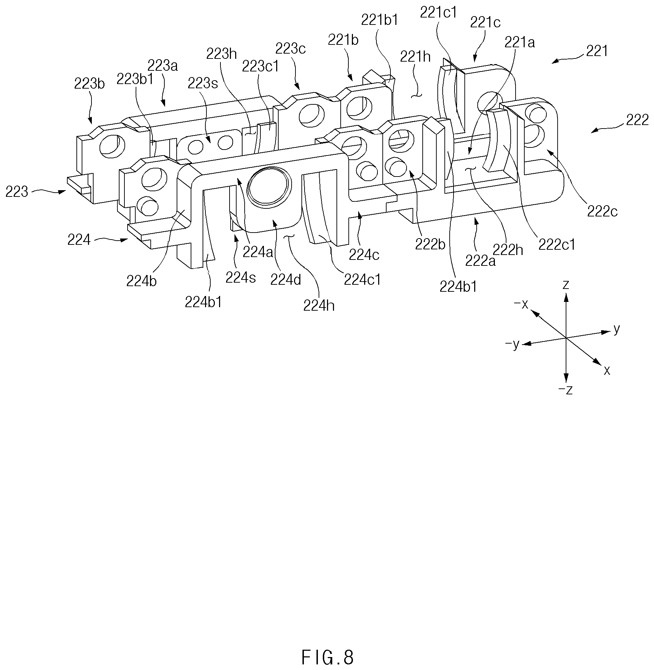

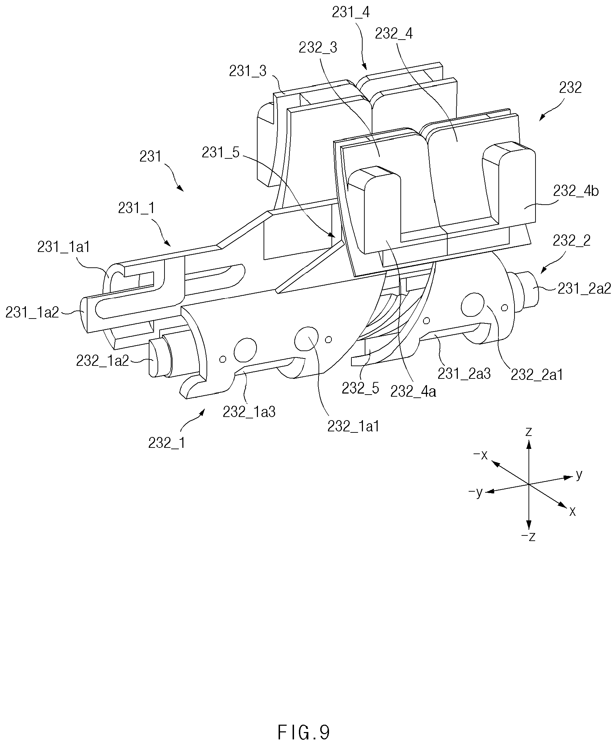

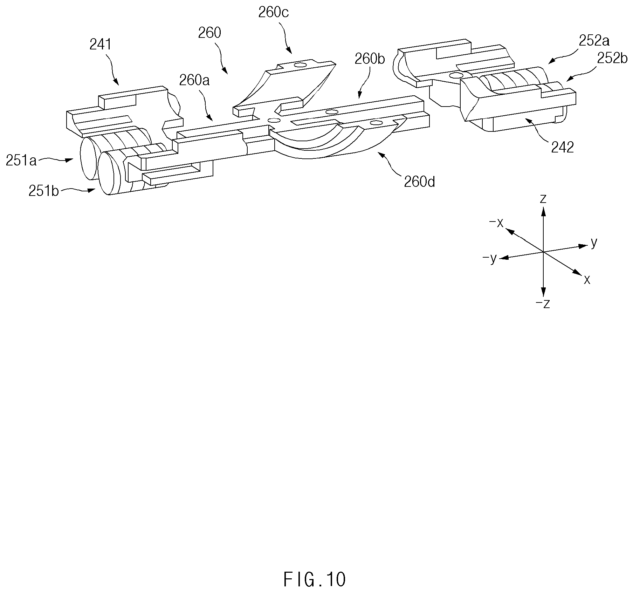

FIG. 2 is a view illustrating a hinge structure in a folded state according to an embodiment as viewed in the z-axis direction. FIG. 3 is a side view illustrating the hinge structure in the folded state according to an embodiment as viewed in the direction from the x-axis to the -x-axis. FIG. 4 is a rear view illustrating the hinge structure in the folded state according to an embodiment as viewed in the direction from the y-axis to the -y-axis. FIG. 5 is an exploded perspective view of the hinge structure according to an embodiment. FIG. 6 is a view illustrating an example of a fixed bracket of the hinge structure according to an embodiment. FIG. 7 is a view illustrating an example of rotation members of the hinge structure according to an embodiment. FIG. 8 is a view illustrating an example of link members of the hinge structure according to an embodiment. FIG. 9 is a view illustrating an example of arm members of the hinge structure according to an embodiment. FIG. 10 is a view illustrating an example of cam members and an interlocking member of the hinge structure according to an embodiment. As described above, the one or more hinge structures 200a, 200b, and 200c may have the same structure and shape. Therefore, in the following description, one hinge structure (e.g., the first hinge structure 200a) will be described as a main example. The other hinge structures (e.g., 200b and 200c) may have a structure that is the same as or similar to the structure of the first hinge structure 200a.

Referring to FIGS. 1 to 10, the first hinge structure 200a may include a fixed bracket 210 (or, a bracket, a center bracket, or a fixed member), a first rotation member 211 (or, a first rotation structure or a first rotating body), a second rotation member 212 (or, a second rotation structure or a second rotating body), a first link member 221 (or, a first slide link, a first rotation support structure, or a first link rotation member), a second link member 222 (or, a second slide link, a second rotation support structure, or a second link rotation member), a first arm member 231 (or, a first arm structure or a first arm), a second arm member 232 (or, a second arm structure or a second arm), a first cam member 241 (or, a first cam or a first cam structure), a second cam member 242 (or, a second cam or a second cam structure), and an interlocking member 260 (or, a link member, a link interlocking member, an arm interlocking member, or a motion conversion structure).

At least a portion of the fixed bracket 210 may be seated on and fixed to the inside of the hinge housing 150. In this regard, the fixed bracket 210 may include at least one through-hole formed through the fixed bracket 210 in the z-axis direction, and the hinge housing 150 may include at least one protrusion or boss inserted into the at least one through-hole. According to an embodiment, the fixed bracket 210 may include a fixed bracket body 210a formed such that the length in the y-axis or -y-axis direction is greater than the width or length in the x-axis direction. Sides of the first and second rotation members 211 and 212 and sides of the arm members 231 and 232 may be disposed on (or, coupled to) the fixed bracket 210. The bottom of the fixed bracket body 210a may be provided in a shape corresponding to the inner surface of the hinge housing 150. For example, at least a portion of the bottom of the fixed bracket body 210a may form a curved surface. The fixed bracket body 210a may include, at opposite edges thereof (e.g., an edge in the -y-axis or y-axis direction), at least one hole structure 210a1 for fixing the fixed bracket 210 to the inside of the hinge housing 150.

The fixed bracket 210 may include a structure (e.g., a first rail 210e and a second rail 210f) to which a portion of the first rotation member 211 (e.g., a first rail structure 211b or a first rail structure of the first rotation member) and a portion of the second rotation member 212 (e.g., a third rail structure 212b or a first rail structure of the second rotation member) are fastened so as to be rotatable. At least one hole or groove structure used to fix the fixed bracket 210 to the inside of the hinge housing 150 may be disposed in the fixed bracket body 210a adjacent to the first rail 210e and the second rail 210f.

The first rail 210e may include a first rail wing 210e1 and a second rail wing 210e2 spaced apart from each other in the y-axis or -y-axis direction to form an empty space 210eh in a central portion therebetween. The first rail wing 210e1 and the second rail wing 210e2 may be fastened to the first rail structure 211b provided in the shape of two curved wings and may support a rotary motion (or, an arc motion) of the first rail structure 211b. The fixed bracket body 201a adjacent to the first rail 210e and the fixed bracket body 201a adjacent to the second rail 210f may include at least one hole or groove structure used to fix the fixed bracket 210 to the inside of the hinge housing 150. The first rail 201e of the fixed bracket 210 forms a virtual axis (e.g., a first axis 11 or a first virtual axis) about which the first rail structure 211b rotates in place while the first rail structure 211b of the first rotation member 211 rotates.

The second rail 210f may be located on the opposite side to the first rail 210e with respect to the y-axis center line of the fixed bracket 210 and may be staggered with respect to the first rail 210e based on the x-axis. Similarly to the first rail 210e, the second rail 210f may include a third rail wing 210f1 and a fourth rail wing 210f2 spaced apart from each other in the y-axis or -y-axis direction to form an empty space in a central portion therebetween. The third rail wing 210f1 and the fourth rail wing 210f2 may be fastened to the third rail structure 212b provided in the shape of two curved wings and may support a rotary motion (or, an arc motion) of the third rail structure 212b of the second rotation member 212. The second rail 210f forms a virtual axis (e.g., a second axis 12 or a second virtual axis) about which the third rail structure 212b rotates in place while the third rail structure 212b of the second rotation member 212 rotates. The first axis 11 and the second axis 12 may be located on the same x-y plane. Accordingly, when the foldable electronic device 100 is in the unfolded state, the minimum straight-line distance between the first axis 11 and the display 160 may be equal to the distance (or, the shortest distance or the minimum straight-line distance) between the second axis 12 and the display 160.

The fixed bracket 210 may include a structure (e.g., a structure forming a first cam hole 210b (or, a groove)) to which the first cam member 241 is fastened so as to be movable in a first direction (e.g., the -y-axis or y-axis direction) for a cam motion. The fixed bracket 210 may include, on one side of the first cam hole 210b (e.g., in the direction from the y-axis to the -y-axis), a first cam fixing part 210b1 and a second cam fixing part 210b2 on which sides of a first elastic member 251a and a second elastic member 251b included in the first cam member 241 are mounted. The first cam fixing part 210b1 and the second cam fixing part 210b2 may protrude in the direction from the -y-axis to the y-axis. The fixed bracket 210 may include a structure (a structure forming a second cam hole 210d (or, a groove)) to which the second cam member 242 is fastened so as to be movable in the direction opposite to the first direction for a cam motion. The fixed bracket 210 may include, on one side of the second cam hole 210d, a third cam fixing part 210d1 and a fourth cam fixing part 210d2 on which sides of a third elastic member 252a and a fourth elastic member 252b included in the second cam member 242 are mounted. The third cam fixing part 210d1 and the fourth cam fixing part 210d2 may protrude in the direction from the y-axis to the -y-axis.

The first cam hole 210b and the second cam hole 210d may be disposed in the fixed bracket 210 so as to be spaced apart from each other at a certain interval. The fixed bracket 210 may include, between the first cam hole 210b and the second cam hole 210d, an interlocking member region 210c on which the interlocking member 260 is seated. The interlocking member 260 may be seated on the interlocking member region 210c and may be coupled with the arm members 231 and 232. The interlocking member region 210c may include four guard structures 210c1, 210c2, 210c3, and 210c4 that protrude in the direction from the -z-axis to the z-axis (or, in the direction from the bottom surface of the foldable electronic device 100 to the front surface of the display 160) to prevent separation of the interlocking member 260 in the x-y plane direction or reduce movement of the interlocking member 260 on the x-y plane. The four guard structures 210c1, 210c2, 210c3, and 210c4 may be symmetrically disposed with respect to the center of the interlocking member 260. For example, the four guard structures 210c1, 210c2, 210c3, and 210c4 may be disposed side by side in the x-axis and y-axis directions and may be spaced apart from each other by a predefined distance. To prevent separation of the interlocking member 260 in the z-axis direction, the four guard structures 210c1, 210c2, 210c3, and 210c4 may have a hook shape that protrudes in the z-axis direction and has a curved upper end.

The fixed bracket 210 may be formed of a material having a certain rigidity (e.g., a metallic material or reinforced plastic having a certain rigidity) to support movement of the first rotation member 211, the second rotation member 212, the first arm member 231, the second arm member 232, the first cam member 241, the second cam member 242, and the interlocking member 260 in a hinge operation process. In the above description, it has been exemplified that the fixed bracket 210 is provided as a separate component and fixed to the hinge housing 150. However, one shape of the hinge housing 150 may be integrally provided as the shape of the fixed bracket 210. In the illustrated drawings, the fixed bracket 210 is illustrated and described as an integrated structure on which at least some of the first rotation member 211, the second rotation member 212, the first arm member 231, the second arm member 232, the first cam member 241, the second cam member 242, and the interlocking member 260 are seated. However, the disclosure is not limited thereto. For example, the fixed bracket 210 may include a first part (e.g., the first rail 210e and the second rail 210f) to which the first rotation member 211 and the second rotation member 212 are fastened to perform a hinge operation, a second part (e.g., the portions around the first cam hole 210b and the second cam hole 210d) on which the first cam member 241 and the second cam member 242 are seated and that supports the cam members 241 and 242 in a process in which the cam members 241 and 242 move in the -y-axis or y-axis direction, and a third part (e.g., the interlocking member region 210c) that supports the interlocking member 260 in a process in which the interlocking member 260 moves in the -y-axis or y-axis direction, and at least a part of the first to third parts described above may be separately provided and may be fixed to the hinge housing 150, or may be integrated into the hinge housing 150. For example, the first part may be formed independently of the other parts, or at least a portion of the second part may be independently formed and may be fixed to the hinge housing 150. Alternatively, at least one part of the fixed bracket 210 may be integrated with the hinge housing 150, and the other parts of the fixed bracket 210 may be independently provided and may be seated on the hinge housing 150.

The first rotation member 211 includes a part (e.g., the first rail structure 211b) fastened to one side (e.g., the first rail 210e) of the fixed bracket 210 to perform a hinge motion, a part (e.g., the second rail structure 211c) coupled to one side of the first link member 221, and a first rotation member body 211a disposed between the first rail structure 211b and the second rail structure 211c. According to an embodiment, movement of the first rotation member 211 toward the fixed bracket may be restricted by the first link member 221 to which the first rotation member 211 is fastened. The first rail structure 211b of the first rotation member 211 may include a first sub-rail structure 211b_1 fastened with the first rail wing 210e1 of the fixed bracket 210, a second sub-rail structure 211b_2 fastened with the second rail wing 210e2 of the fixed bracket 210, and a central part that connects the first sub-rail structure 211b_1 and the second sub-rail structure 211b_2 and that is disposed in the empty space 210eh of the first rail 210e. The first rail structure 211b of the first rotation member 211 fastened with the fixed bracket 210 may perform a rotary motion in place about the first axis 11 while the first link member 221 coupled to the first housing 110 moves depending on movement of the first housing 110. The second rail structure 211c of the first rotation member 211 may be coupled to the first link member 221. For example, the second rail structure 211c of the first rotation member 211 may rotate (or, slide) within the first link member 221 while moving in one direction (e.g., in the counterclockwise direction while the foldable electronic device 100 is folded in the unfolded state or in the clockwise direction while the foldable electronic device 100 is unfolded in the folded state). The second rail structure 211c may include a third sub-rail structure 211c_1 fastened with one side (e.g., a fifth rail wing 221b1) of the first link member 221, a fourth sub-rail structure 211c_2 fastened with an opposite side (e.g., a sixth rail wing 221c1) of the first link member 221, and a central part that connects the third sub-rail structure 211c_1 and the fourth sub-rail structure 211c_2 and that is disposed in an empty space 221h of the first link member 221. The first rotation member 211 may make frictional contact with the fixed bracket 210 and the first link member 221 while a hinge operation is repeated, and the first rotation member 211 may be formed of a material (e.g., a metallic material) that has a certain strength or higher and is capable of withstanding the friction. At least a portion of the first wing plate 131 may be fixed to the first rotation member 211. In this regard, the first rotation member body 211a may include at least one hole or groove used to couple the first rotation member body 211a with the first wing plate 131.

The second rotation member 212 includes a part (e.g., the third rail structure 212b) fastened to an opposite side (e.g., the second rail 210f) of the fixed bracket 210 to perform a hinge motion, a part (e.g., a fourth rail structure 212c) coupled to the second link member 222, and a second rotation member body 212a disposed between the third rail structure 212b and the fourth rail structure 212c. According to an embodiment, movement of the second rotation member 212 toward the fixed bracket 210 may be restricted by the second link member 222 to which the second rotation member 212 is fastened. The third rail structure 212b of the second rotation member 212 fastened with the fixed bracket 210 may perform a rotary motion in place about the second axis 12 while the second link member 222 coupled to the second housing 120 moves depending on movement of the second housing 120. The fourth rail structure 212c coupled to the second link member 222 may rotate (or, slide) within the second link member 222 while moving in one direction (e.g., in the counterclockwise direction while the foldable electronic device 100 is folded in the unfolded state or in the clockwise direction while the foldable electronic device 100 is unfolded in the folded state). Similarly to the first rail structure 211b, the third rail structure 212b may include sub-rail structures. For example, the third rail structure 212b may include a fifth sub-rail structure fastened with the third rail wing 210f1 of the second rail 210f of the fixed bracket 210, a sixth sub-rail structure fastened with the fourth rail wing 210f2 of the second rail 210f of the fixed bracket 210, and a central part connecting the fifth sub-rail structure and the sixth sub-rail structure. The third rail structure 212b of the second rotation member 212 fastened with the fixed bracket 210 may perform a rotary motion in place about the second axis 12 while the second link member 222 coupled to the second housing 120 moves depending on movement of the second housing 120. The fourth rail structure 212c coupled to the second link member 222 may rotate (or, slide) within the second link member 222 while moving in one direction (e.g., in the counterclockwise direction while the foldable electronic device 100 is folded in the unfolded state or in the clockwise direction while the foldable electronic device 100 is unfolded in the folded state). In this regard, similarly to the first link member 221, the second link member 222 may include rail wings that are spaced apart from each other to form an empty space in a central portion therebetween and that include a curved surface.

Similarly to the first rotation member 211, the second rotation member 212 may make frictional contact with the fixed bracket 210 and the second link member 222 while a hinge operation is repeated, and the second rotation member 212 may be formed of a material (e.g., a metallic material) that has a certain strength or higher and is capable of withstanding the friction. For example, the second rotation member 212 may be formed of the same material as that of the first rotation member 211. A portion of the second wing plate 132 may be fixed to the second rotation member 212. In this regard, the second rotation member body 212a may include at least one hole or groove used to couple the second rotation member body 212a with the second wing plate 132.

The second rotation member 212 may perform a motion in the direction opposite to that of the first rotation member 211. For example, the third rail structure 212b of the second rotation member 212 may rotate in place in the clockwise direction while the first rail structure 211b of the first rotation member 211 rotates in place in the counterclockwise direction.

While the foldable electronic device 100 is folded, the first rail structure 211b of the first rotation member 211 may perform a rotary motion in the counterclockwise direction, and the first link member 221 inserted into the second rail structure 211c may slide in the clockwise direction along the second rail structure 211c (the sliding operation is relative, and therefore the first link member 221 may slide in the clockwise direction relative to the second rail structure 211c). While the foldable electronic device 100 is folded, the third rail structure 212b of the second rotation member 212 may perform a rotary motion in the clockwise direction along the second rail 210f of the fixed bracket 210, and the second link member 222 inserted into the fourth rail structure 212c may slide in the counterclockwise direction (the sliding operation is relative, and therefore the second link member 222 may slide in the clockwise direction relative to the fourth rail structure 212c).

The first link member 221 includes a structure coupled and fixed to one side of the first housing 110. The first link member 221 may include a first wing 221b and a second wing 221c that extend in the z-axis direction from opposite sides (e.g., edges facing in the y-axis and -y-axis directions) of a first link body 221a. The first link member 221 includes a structure (e.g., the first wing 221b and the second wing 221c) on which a portion of the first rotation member 211 (e.g., the second rail structure 211c) is seated. The fifth rail wing 221b1 protruding toward the second wing 221c may be formed on the first wing 221b, and the sixth rail wing 221c1 protruding toward the first wing 221b may be formed on the second wing 221c. The fifth rail wing 221b1 may be fastened with the sub-rail structure of the second rail structure 211c that faces in the y-axis direction, and the sixth rail wing 221c1 may be fastened with the sub-rail structure of the second rail structure 211c that faces in the -y-axis direction. The empty space 221h may be formed between the first wing 221b and the second wing 221c. Each of the fifth rail wing 221b1 and the sixth rail wing 221c1 may be provided in an arc shape having a certain size. At least one structure (e.g., hole or groove) used to fix the first link member 221 to the first housing 110 may be formed in the first wing 221b and the second wing 221c. The first link member 221 may be disposed side by side with a third link member 223 in the y-axis direction.

The second link member 222 includes a structure coupled and fixed to one side of the second housing 120. The second link member 222 may include a third wing 222b and a fourth wing 222c that extend in the z-axis direction from opposite sides (e.g., edges facing in the y-axis and -y-axis directions) of a second link body 222a. The second link member 222 includes a structure (e.g., the third wing 222b and the fourth wing 222c) on which a portion of the second rotation member 212 (e.g., the fourth rail structure 212c) is seated. A seventh rail wing 222b1 protruding toward the fourth wing 222c may be formed on the third wing 222b, and an eighth rail wing 222c1 protruding toward the third wing 222b may be formed on the fourth wing 222c. The seventh rail wing 222b1 may be fastened with the sub-rail structure of the fourth rail structure 212c that faces in the y-axis direction, and the eighth rail wing 222c1 may be fastened with the sub-rail structure of the fourth rail structure 212c that faces in the -y-axis direction. An empty space 222h may be formed between the third wing 222b and the fourth wing 222c. Each of the seventh rail wing 222b1 and the eighth rail wing 222c1 may be provided in an arc shape having a certain size. At least one structure (e.g., hole or groove) used to fix the second link member 222 to the second housing 120 may be formed in the third wing 222b and the fourth wing 222c. The above-described second link member 222 may be disposed to be symmetrical to the first link member 221 based on the y-axis direction. The second link member 222 may be disposed side by side with a fourth link member 224 in the y-axis direction.

The third link member 223 includes a structure on which a portion of the first arm member 231 is seated. The third link member 223 may include a third link body 223a, and a fifth wing 223b and a sixth wing 223c that extend in the -z-axis direction from opposite sides (e.g., edges facing in the y-axis and -y-axis directions) of the third link body 223a. A ninth rail wing 223b1 protruding toward the sixth wing 223c may be formed on the fifth wing 223b, and a tenth rail wing 223c1 protruding toward the fifth wing 223b may be formed on the sixth wing 223c. The ninth rail wing 223b1 may be fastened with a first upper front part 231_3 of the first arm member 231, and the tenth rail wing 223c1 may be fastened with a first upper rear part 231_4 of the first arm member 231. A structure (e.g., at least one hole or groove) used to fix the third link member 223 to the first housing 110 may be formed on a side of the fifth wing 223b that is opposite to the ninth rail wing 223b1 and on a side of the sixth wing 223c that is opposite to the tenth rail wing 223c1. An empty space 223h may be formed between the fifth wing 223b and the sixth wing 223c. The empty space 223h may be used to allow one side of the first arm member 231 (e.g., the first upper front part 231_3 and the first upper rear part 231_4) to slide. The third link member 223 may include a first support part 223d protruding from one side of the third link body 223a in the -z-axis direction. The first support part 223d may mount, fix, and/or support a first link elastic member 223s. The first link elastic member 223s may provide an elastic force that pushes the first upper front part 231_3 and the first upper rear part 231_4 in the x-axis direction.

The fourth link member 224 includes a structure on which a portion of the second arm member 232 is seated. The fourth link member 224 may include a fourth link body 224a, and a seventh wing 224b and an eighth wing 224c that extend in the -z-axis direction from opposite sides (e.g., edges facing in the y-axis and -y-axis directions) of the fourth link body 224a. An eleventh rail wing 224b1 protruding toward the eighth wing 224c may be formed on the seventh wing 224b, and a twelfth rail wing 224c1 protruding toward the seventh wing 224b may be formed on the eighth wing 224c. The eleventh rail wing 224b1 may be fastened with one side of a second upper front part 232_3 of the second arm member 232, and the twelfth rail wing 224c1 may be fastened with an opposite side of a second upper rear part 232_4 of the second arm member 232. The eleventh rail wing 224b1 and the twelfth rail wing 224c1 may have an arc shape having a certain size. A structure (e.g., at least one hole or groove) used to fix the fourth link member 224 to the second housing 120 may be formed on a side of the seventh wing 224b that is opposite to the eleventh rail wing 224b1 and on a side of the eighth wing 224c that is opposite to the twelfth rail wing 224c1. An empty space 224h may be formed between the seventh wing 224b and the eighth wing 224c. The empty space 224h may be used to allow one side of the second arm member 232 (e.g., the second upper front part 232_3 and the second upper rear part 232_4) to slide. The fourth link member 224 may include a second support part 224d protruding from one side of the fourth link body 224a in the -z-axis direction. The second support part 224d may mount, fix, and/or support a second link elastic member 224s. The second link elastic member 224s may provide an elastic force that pushes the second upper front part 232_3 and the second upper rear part 232_4 in the - x-axis direction. For example, the directions of the elastic forces exerted by the first link elastic member 223s and the second link elastic member 224s may be different from each other, or may be opposite to each other.

The first to fourth link members 221, 222, 223, and 224 may be formed of the same material. Alternatively, the first to fourth link members 221, 222, 223, and 224 may be at least partially formed of different structures (e.g., moldable materials). Meanwhile, although it has been exemplified that the link members 221, 222, 223, and 224 are separated from one another, the disclosure is not limited thereto. For example, the first link member 221 and the third link member 223 may be connected or integrated with each other, and the second link member 222 and the fourth link member 224 may be connected or integrated with each other.

The first arm member 231 may be disposed to be symmetrical to the second arm member 232 with respect to the y-axis or the -y-axis. Accordingly, parts of the structure of the first arm member 231 that are difficult to observe in the illustrated drawings will be described based on the structure of the second arm member 232. The first arm member 231 may perform a rotary motion in the direction from the z-axis to the -x-axis or in the direction from the -x-axis to the z-axis. The first arm member 231 may include a first lower part fastened with one side of the fixed bracket 210 (e.g., a first lower front part 231_1 and a first lower rear part (e.g., a structure symmetrical to a second lower rear part 232_2 of the second arm member 232)) and a first upper part (e.g., the first upper front part 231_3 fastened to the first link member 221 while being connected with the first lower front part 231_1 and the first upper rear part 231_4 fastened to the first link member 221 while being connected with the first lower rear part). A first interlocking connecting hole 231_5 may be disposed between the first lower front part 231_1 and the first lower rear part. One side of the interlocking member 260 may be fastened to the first interlocking connecting hole 231_5.

The second arm member 232 may be disposed to be symmetrical to the first arm member 231 with respect to the y-axis or the -y-axis. The second arm member 232 may perform a rotary motion in the direction from the z-axis to the x-axis or in the direction from the x-axis to the z-axis. The second arm member 232 may perform a rotary motion in the direction opposite to the direction of motion of the first arm member 231. The second arm member 232 may include a second lower part fastened with one side of the fixed bracket 210 (e.g., a second lower front part 232_1 and the second lower rear part 232_2 (e.g., a structure symmetrical to the first lower rear part of the first arm member 231)) and a second upper part (e.g., the second upper front part 232_3 fastened to the second link member 222 while being connected with the second lower front part 232_1 and the second upper rear part 232_4 fastened to the second link member 222 while being connected with the second lower rear part 232_2). A second interlocking connecting hole 232_5 may be disposed between the second lower front part 232_1 and the second lower rear part 232_2. The second interlocking connecting hole 232_5 may have the same structure as the first interlocking connecting hole 231_5 formed in the first arm member 231. The second interlocking connecting hole 232_5 may be fastened with one side of the interlocking member 260.

The second lower front part 232_1 of the second arm member 232 may include a second lower front body 232_1a1 formed to be longer in the y-axis direction than in the x-axis direction, a second lower front hole 232_1a3 that is formed in the second lower front body 232_1a1 and that the first guard structure 210c1 formed on the fixed bracket 210 is inserted into and removed from, and a second lower front end 232_1a fastened with one side of the first cam member 241. The first lower front part 231_1 of the first arm member 231 may be formed to be the same as or similar to the second lower front part 232_1. For example, the first lower front part 231_1 may include a first lower front body 231_1a1 formed to be longer in the y-axis direction than in the x-axis direction, a first lower front hole (e.g., a position and a structure symmetrical to those of the second lower front hole 232_1a3 with respect to the y-axis) that is formed in the first lower front body 231_1a1 and that the third guard structure 210c3 formed on the fixed bracket 210 is inserted into and removed from, and a first lower front end 231_1a2 fastened with an opposite side of the first cam member 241.

The second lower rear part 232_2 of the second arm member 232 may be disposed side by side with the second lower front part 232_1 in the y-axis direction. The second lower rear part 232_2 may include a second lower rear body 232_2a1, a second lower rear hole 232_2a2 that is formed in the second lower rear body 232_2a1 and that the second guard structure 210c2 formed on the fixed bracket 210 is inserted into and removed from, and a second lower rear end 232_2a2 fastened with one side of the second cam member 242. The first lower rear part of the first arm member 231 may be formed to be the same as or similar to the second lower rear part 232_2. For example, the first lower rear part may include a first lower rear body disposed side by side with the first lower front part 231_1 based on the y-axis direction, a first lower front hole that is formed in the first lower rear body and that the fourth guard structure 210c4 formed on the fixed bracket 210 is inserted into and removed from, and a first lower rear end fastened with an opposite side of the second cam member 242.

The second upper front part 232_3 of the second arm member 232 may be disposed to protrude in the z-axis direction with respect to the second lower front part 232_1. The second upper front part 232_3 may be disposed adjacent to the second upper rear part 232_4. The second upper front part 232_3 may have a rail shape engraved in the direction from the x-axis to the -x-axis. The second upper front part 232_3 may be fastened with one side of the fourth link member 224 and may slide along a rail structure formed on the fourth link member 224 during a hinge operation of the foldable electronic device 100. In this process, the second upper front part 232_3 may be brought into contact with one side of the second link elastic member 224s disposed on the fourth link member 224.

The second upper rear part 232_4 of the second arm member 232 may be disposed to protrude in the z-axis direction with respect to the second lower rear part 232_2. The second upper rear part 232_4 may be disposed adjacent to the second upper front part 232_3. Based on the y-axis direction, the second upper rear part 232_4 and the second upper front part 232_3 may be disposed to be symmetrical to the first upper rear part 231_4 and the first upper front part 231_3. Similarly to the second upper front part 232_3, the second upper rear part 232_4 may have a rail shape engraved in the direction from the x-axis to the -x-axis. The second upper rear part 232_4 may be fastened with an opposite side of the fourth link member 224 and may slide along the rail structure formed on the fourth link member 224 together with the second upper front part 232_3 during the hinge operation of the foldable electronic device 100. In this process, similarly to the second upper front part 232_3, the second upper rear part 232_4 may be brought into contact with an opposite side of the second link elastic member 224s disposed on the fourth link member 224.

The first arm member 231 may include a first arm protrusion (or, a first stopper) disposed between the first lower front part 231_1 and the first upper front part 231_3 and a second arm protrusion (or, a second stopper) disposed between the first lower rear part and the first upper rear part 231_4. Based on the y-axis direction, the first arm protrusion and the second arm protrusion may be disposed and formed to be symmetrical to a third arm protrusion 232_4a (or, a third stopper) and a fourth arm protrusion 232_4b (or, a fourth stopper) that are formed on the second arm member 232. The third arm protrusion 232_4a may be disposed between the second lower front part 232_1 and the second upper front part 232_3 of the second arm member 232, and the fourth arm protrusion 232_4b may be disposed between the second lower rear part 232_2 and the second upper rear part 232_4. The third arm protrusion 232_4a and the fourth arm protrusion 232_4b may be formed to protrude in the x-axis direction, and the first arm protrusion and the second arm protrusion may be formed to protrude in the -x-axis direction. When viewed from above the hinge housing 150 in the folded state of the foldable electronic device 100, at least a portion of the first arm protrusion may be disposed to overlap one side of the first reinforcing structure (e.g., 111a) formed on one side of the first housing 110, and at least a portion of the second arm protrusion may be disposed to overlap an opposite side of the first reinforcing structure (e.g., 111a). According to an embodiment, when viewed in a direction toward the hinge housing 150 in the folded state of the first housing 110 and the second housing 120, at least a portion of the first arm protrusion may be disposed to overlap the first reinforcing structure 111a of the first housing, and movement of the first arm member 231 toward the fixed bracket 210 may be restricted. Similarly, according to an embodiment, when viewed in the direction toward the hinge housing 150 in the folded state of the first housing 110 and the second housing 120, at least a portion of the second arm protrusion may be disposed to overlap the second reinforcing structure of the second housing, and movement of the second arm member 232 toward the fixed bracket 210 may be restricted. When viewed from above the hinge housing 150 in the folded state of the foldable electronic device 100, at least a portion of the third arm protrusion 232_4a may be disposed to overlap one side of the second reinforcing structure (e.g., 121a) formed on one side of the second housing 120, and at least a portion of the fourth arm protrusion 232_4b may be disposed to overlap an opposite side of the second reinforcing structure (e.g., 121a). Meanwhile, in the above description, it has been exemplified that two arm protrusions are formed on each of the first arm member 231 and the second arm member 232. However, the disclosure is not limited thereto. For example, each of the first arm member 231 and the second arm member 232 may include only one arm protrusion. For example, the first arm member 231 may include only the first arm protrusion (or, the second arm protrusion) disposed between the first lower front part and the first upper front part (or, between the first lower rear part and the first lower front part). In another example, the second arm member 232 may include only the third arm protrusion (or, the fourth arm protrusion) disposed between the second lower front part and the second upper front part (or, between the second lower rear part and the second lower front part). At least a portion of at least one of the first to fourth arm protrusions may be formed of a material (e.g., at least one of rubber, plastic, urethane, or a polymer) different from those of surrounding structures (e.g., the metal arm members) to increase a grip force (or, a response force, a support force, or a friction force that prevents slipping in a contact process in the event of impact). According to an embodiment, the first to fourth arm protrusions may all have the same structure and size. Alternatively, at least one of the first to fourth arm protrusions may have a shape or size different from those of the other arm protrusions depending on location or design change. According to an embodiment, when the first housing 110 and the second housing 120 are in the folded state, at least one of the first to fourth arm protrusions may protrude toward the inner surface of the first housing 110 (or, toward the inner surface of the second housing 120) by 0.2 mm to 2.0 mm. The degree of protrusion described above may be changed depending on a change in the size of the foldable electronic device 100.

The first cam member 241 is at least partially seated in the first cam hole 210b formed on one side of the fixed bracket 210 (e.g., in a region of the fixed bracket 210 biased in the -y-axis direction or in front of the interlocking member region 210c based on the -y-axis direction) and performs a cam operation during rotation of the first arm member 231 and the second arm member 232 while making contact with at least portions of the first arm member 231 and the second arm member 232. At least one elastic member (e.g., the first elastic member 251a and the second elastic member 251b) may be disposed in the first cam hole 210b such that the first cam member 241 is brought into close contact with one side of the first arm member 231 and one side of the second arm member 232 (e.g., the first lower front end 231_1a2 of the first arm member 231 and the second lower front end 232_1a2 of the second arm member 232). In this regard, the first cam member 241 may include shafts or pillars (e.g., a first pillar and a second pillar) that protrude in the -y-axis direction and that are spaced apart from each other by a pre-defined distance. For example, the first elastic member 251a may be disposed between the first cam fixing part 210b1 formed in the first cam hole 210b and the first pillar of the first cam member 241. The second elastic member 251b may be disposed between the second cam fixing part 210b2 formed in the first cam hole 210b and the second pillar of the first cam member 241. An elastic force provided by the at least one elastic member may provide free-stop and detent functions at various angles of the foldable electronic device 100 by changing a friction force (or torque) by contact between the first cam member 241, the first arm member 231, and the second arm member 232.

The second cam member 242 is at least partially seated in the second cam hole 210d formed on an opposite side of the fixed bracket 210 that is spaced apart from the first cam member 241 at a certain interval (e.g., in a region of the fixed bracket 210 biased in the y-axis direction or behind the interlocking member 260 based on the y-axis direction) and performs a cam operation during rotation of the first arm member 231 and the second arm member 232 while making contact with at least portions of the first arm member 231 and the second arm member 232 (e.g., the first lower rear end of the first arm member 231 and the second lower rear end 232_2a2 of the second arm member 232). In this regard, at least one elastic member (e.g., the third elastic member 252a and the fourth elastic member 252b) may be disposed between an opposite side of the fixed bracket 210 (e.g., the third cam fixing part 210d1 and the fourth cam fixing part 210d2 formed in the second cam hole 210d) and the second cam member 242 such that the second cam member 242 is brought into close contact with an opposite side of the first arm member 231 and an opposite side of the second arm member 232. The second cam member 242 may include shafts or pillars (e.g., a third pillar and a fourth pillar) into which one side of the third elastic member 252a and one side of the fourth elastic member 252b are inserted. The interlocking member 260 may be disposed between the first cam member 241 and the second cam member 242. An elastic force provided by the at least one elastic member (e.g., the third elastic member 252a and the fourth elastic member 252b) may provide free-stop and detent functions at various angles of the foldable electronic device 100 by changing a friction force (or torque) by contact between the second cam member 242, the first arm member 231, and the second arm member 232. In the above description, it has been exemplified that the two cam members are disposed. However, the disclosure is not limited thereto, and one cam member or three or more cam members may be disposed.

The interlocking member 260 may be seated on a portion (e.g., the interlocking member region 210c) of the fixed bracket 210 and may perform a linear motion in the -y-axis or y-axis direction while the foldable electronic device 100 performs a hinge operation. The interlocking member 260 includes a first interlocking body 260a, a second interlocking body 260b, a first interlocking wing 260c, and a second interlocking wing 260d. The first interlocking body 260a may be formed to be long in the y-axis direction. One side (e.g., the front end) of the first interlocking body 260a may be disposed to make contact with the first cam member 241, and an opposite side of the first interlocking body 260a may be connected to the second interlocking body 260b. The second interlocking body 260b may be formed to be continuous from the first interlocking body 260a with respect to the y-axis. The second interlocking body 260b may extend in the y-axis direction from the opposite side of the first interlocking body 260a (e.g., the rear end of the first interlocking body 260a based on the y-axis direction), and an opposite side (e.g., an end facing in the y-axis direction) of the second interlocking body 260b may be disposed to make contact with the second cam member 242. According to an embodiment, the first interlocking body 260a and the second interlocking body 260b may be integrally formed with each other and disposed between the first cam member 241 and the second cam member 242 and may perform a linear motion in the y-axis direction or the -y-axis direction. The sections of the first interlocking body 260a and the second interlocking body 260b in the z-axis direction may be formed to be the same as or similar to each other and may have a stepped shape.

The first interlocking wing 260c may start from a first point between the first interlocking body 260a and the second interlocking body 260b and may extend in a direction between the x-axis and z-axis, and at least a portion of the first interlocking wing 260c may form a curved surface. The z-axis section of the first interlocking wing 260c may have a stepped shape. The first interlocking wing 260c may be coupled with the first interlocking connecting hole 231_5 of the first arm member 231.

The second interlocking wing 260d may start from a second point between the first interlocking body 260a and the second interlocking body 260b (e.g., a point on the opposite side to the first point) and may extend in a direction between the -x-axis and z-axis, and at least a portion of the second interlocking wing 260d may form a curved surface. The z-axis section of the second interlocking wing 260d may have a stepped shape. The second interlocking wing 260d may be coupled with the second interlocking connecting hole 232_5 of the second arm member 232. While the first arm member 231 and the second arm member 232 rotate in the clockwise direction (or, the counterclockwise direction) and the counterclockwise direction (or, the clockwise direction), respectively, the first interlocking wing 260c and the second interlocking wing 260d may change the rotary motion of the first arm member 231 and the second arm member 232 to a linear motion and may transmit the linear motion to the first interlocking body 260a and the second interlocking body 260b. Accordingly, the interlocking member 260 may allow the first arm member 231 and the second arm member 232 to move in conjunction with each other.

The above-described hinge structure has been described with the structure of the first hinge structure 200a as an example. However, the disclosure is not limited thereto, and a hinge structure having arm protrusions formed therein may be at least one hinge structure among the hinge structures. Alternatively, arm protrusions may be formed only in the hinge structures disposed at the opposite edges of the foldable electronic device 100 (e.g., the first hinge structure 200a and the third hinge structure 200c), and a separate arm protrusion may not be disposed in the hinge structure disposed in the center of the foldable electronic device 100.

As described above, at least some of the hinge structures according to the embodiment of the disclosure may include the reinforcing structures disposed on the housings to fix one or more components that are likely to be separated from specified positions when the foldable electronic device 100 in the folded state falls in a specific direction or external pressure is applied thereto. The reinforcing structures may support the one or more components to prevent the one or more components from being separated from the specified positions.

Additionally or alternatively, although it has been described that the rails (e.g., the first and second rails 210e and 210f) fastened with the rail structures formed in the first rotation member 211 and the second rotation member 212 are formed on the fixed bracket 210, the disclosure is not limited thereto. For example, at least one of the rails 210e and 210f of the fixed bracket 210 may be replaced with a rail structure. Correspondingly, at least one of the rail structures (e.g., 211b and 212b) of the first rotation member 211 and the second rotation member 212 may be replaced with a rail. Similarly, at least one of the rail structures formed in the above-described link members (e.g., 221 and 222) may be replaced with a rail. Correspondingly, the rails formed in at least one of the rotation members 211 and 212 and the arm members 231 and 232, which are coupled with the link members 221 and 222, may be replaced with rail structures.

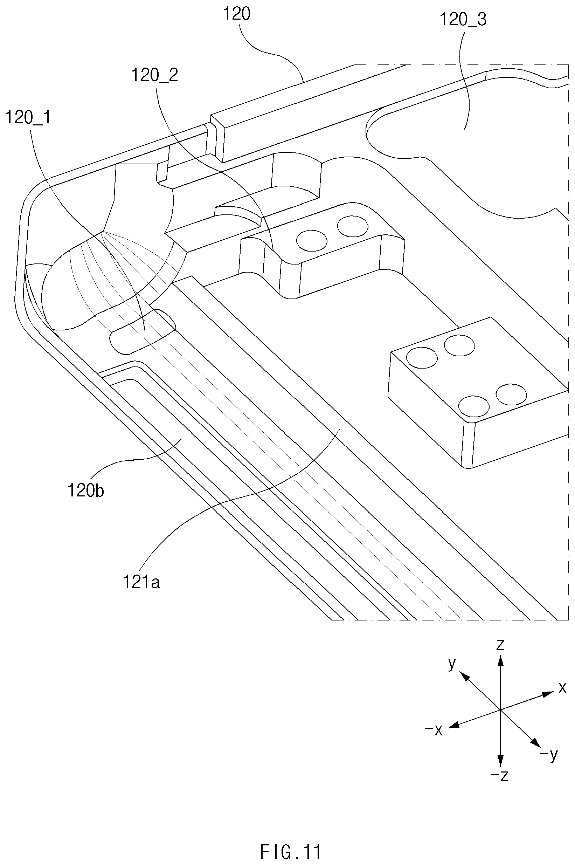

FIG. 11 is a view illustrating an example of the second housing according to an embodiment. Prior to description, FIG. 11 is an enlarged view of a first area 1000 of FIG. 1. For convenience of description, the second housing is illustrated in FIG. 11. However, the first housing may have a structure that is the same as or similar to the structure of the second housing 120. Alternatively, at least the structure of the first housing on which the hinge structures are seated may be the same as the structure of the second housing.

Referring to FIGS. 1 to 11, the second housing 120 according to an embodiment may include, for example, at least a hinge housing seating region 120_1 on which the hinge housing 150 is seated, a hinge structure coupling region 120_2, and a step region 120_3.

At least a portion of the hinge housing 150 may be seated on the hinge housing seating region 120_1. In this regard, the hinge housing seating region 120_1 may include a curved surface in a form similar to at least a portion of the rear surface of the hinge housing 150. The hinge structure coupling region 120_2 may include a region coupled with at least a part (e.g., link members) of a hinge structure (e.g., the first hinge structure 200a). In this regard, the hinge structure coupling region 120_2 may further include a structure protruding in the z-axis direction when compared to the bottom surface of the hinge housing seating region 120_1. The protruding structure may include at least one of a groove, a hook, or a hole for a coupling of the protruding structure and at least a portion of the hinge structure. The step region 120_3 may be formed to be adjacent to or continuous with the hinge structure coupling region 120_2. The step region 120_3 may further include a recess for placement of other components (e.g., electronic elements or a battery) required for operation of the foldable electronic device 100. Although the step region 120_3 is semantically described as a form that protrudes in the z-axis direction when compared to the hinge structure coupling region 120_2 or the hinge housing seating region 120_1, the step region 120_3 may have the same height as the hinge structure coupling region 120_2 or the hinge housing seating region 120_1 as needed or depending on design.

The second housing 120 may include, between the hinge housing seating region 120_1 and the hinge structure coupling region 120_2, a reinforcing structure (e.g., the fourth reinforcing structure 121a based on FIG. 1) that supports at least a portion of the hinge structure (e.g., the first hinge structure 200a) in a specific situation. The fourth reinforcing structure 121a may have a shape longer in the y-axis direction than in the x-axis direction and may further protrude by a pre-defined height with respect to the z-axis when compared to the bottom surface of the hinge housing seating region 120_1. For example, when viewed from a position adjacent to the hinge housing seating region 120_1 or from the z-axis direction to the -z-axis direction (or, in the direction from the front surface of the display on which a screen is displayed to the rear surface of the display), the fourth reinforcing structure 121a may be disposed in a region that at least partially overlaps the hinge housing 150 or the hinge structure. For example, the fourth reinforcing structure 121a may be disposed between the hinge housing seating region 120_1 and the hinge structure coupling region 120_2 to which the hinge structure (e.g., the first hinge structure 200a) is coupled. Meanwhile, referring to FIG. 1, the first reinforcing structure 111a that has a shape the same as or similar to the shape of the fourth reinforcing structure 121a and that is symmetrical to the fourth reinforcing structure 121a based on the y-axis direction may be formed at a position on the first housing 110 that corresponds to the position on the second housing 120 at which the fourth reinforcing structure 121a is formed.

When viewed in the first direction toward the hinge housing 150 in the folded or unfolded state of the foldable electronic device 100, the fourth reinforcing structure 121a may be disposed to at least partially overlap one side of the first hinge structure 200a. Similarly, when viewed in the first direction, the first reinforcing structure 111a may be disposed to at least partially overlap an opposite side of the first hinge structure 200a.

The fourth reinforcing structure 121a (or, the first reinforcing structure 111a) may have, for example, a quadrangular z-axis section. Alternatively, in the unfolded state of the foldable electronic device 100, a side surface of the fourth reinforcing structure 121a that faces in the x-axis direction (e.g. one axis direction on a plane parallel to the display 160) may be formed perpendicular to the bottom surface of the second housing 120 (or, in the form of a hook engraved in the -x-axis direction), and a side surface of the fourth reinforcing structure 121a that faces in the -x-axis direction may protrude from the bottom surface of the hinge housing seating region 120_1 at a predetermined inclined angle in the z-axis direction. In the unfolded state of the foldable electronic device 100, a side surface of the first reinforcing structure 111a that faces in the -x-axis direction (e.g. another axis direction on the plane parallel to the display 160) may be formed perpendicular to the bottom surface of the first housing 110 (or, in the form of a hook engraved in the -x-axis direction), and a side surface of the first reinforcing structure 111a that faces in the x-axis direction may protrude from the bottom surface of the hinge housing seating region at the predetermined inclined angle in the z-axis direction. The inclination direction of the first reinforcing structure 111a and the inclination direction of the fourth reinforcing structure 121a may be symmetrical to each other with respect to the y-axis.

The fourth reinforcing structure 121a (or, the first reinforcing structure 111a) may be disposed in a certain space not overlapping the first hinge structure 200a during a hinge operation of the first hinge structure 200a. Additionally or alternatively, a dust-proof structure 120b that performs a moisture-proof or dust-proof function may be disposed at the edge of the second housing 120 that faces in the -x-axis direction. In relation to the arrangement of the dust-proof structure 120b, the second housing 120 may include a recess that is engraved when compared to the surrounding region and is formed to be long in the y-axis direction.

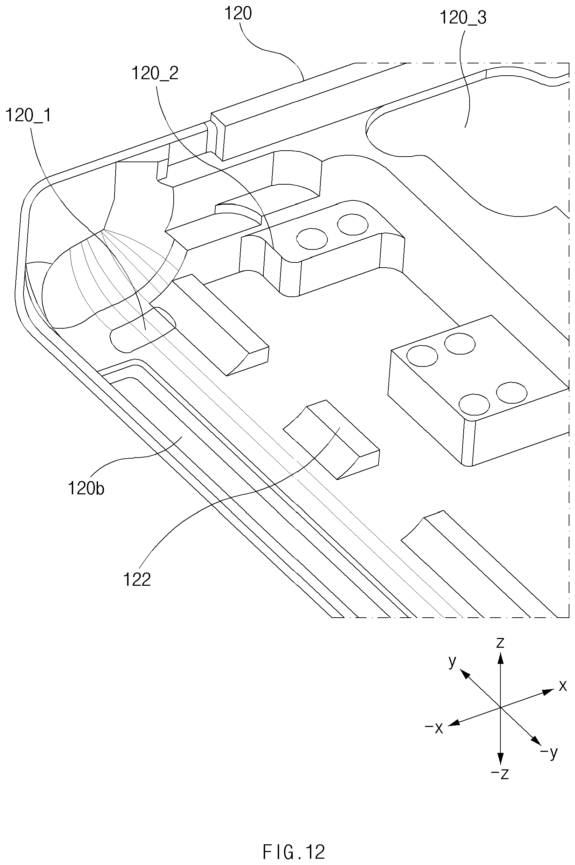

FIG. 12 is a view illustrating an example of the second housing according to an embodiment. Prior to description, the second housing is illustrated in FIG. 12 for convenience of description. However, the first housing may have a structure that is the same as or similar to the structure of the second housing 120. Alternatively, at least the structure of the first housing on which the hinge structures are seated may be the same as the structure of the second housing.

Referring to FIGS. 1 to 12, similarly to that described above with reference to FIG. 11, the second housing 120 according to an embodiment may include at least a hinge housing seating region 120_1 on which the hinge housing 150 is seated, a hinge structure coupling region 120_2, and a step region 120_3.

Based on the illustrated drawing, the hinge housing seating region 120_1 may be disposed at the edge facing in the -x-axis direction, the hinge structure coupling region 120_2 may be continuous with the hinge housing seating region 120_1 and may be located in the x-axis direction from the hinge housing seating region 120_3, and the step region 120_3 may be continuous with the hinge structure coupling region 120_2 and may be located in the x-axis direction from the hinge structure coupling region 120_2. When the foldable electronic device 100 is in the unfolded state, at least a portion of the hinge housing 150 (e.g., one half of the hinge housing 150) may be seated on the hinge housing seating region 120_1. When the foldable electronic device 100 is in the folded state, the hinge housing seating region 120_1 may be mounted in a direction perpendicular to the bottom surface of the hinge housing 150.

The second housing 120 may include, between the hinge housing seating region 120_1 and the hinge structure coupling region 120_2, a modified reinforcing structure (e.g., a modified form of the fourth reinforcing structure 121a based on FIG. 1) that supports at least a portion of a hinge structure (e.g., the first hinge structure 200a) in a specific situation. The modified reinforcing structure 122 may have a shape longer in the y-axis direction than in the x-axis direction and may include a plurality of sub-reinforcing structures that protrude by a pre-defined height with respect to the z-axis when compared to the bottom surface of the hinge housing seating region 120_1. For example, the modified reinforcing structure 122 may be disposed between the hinge housing seating region 120_1 and the hinge structure coupling region 120_2 in the y-axis direction in a form in which two or three structures are spaced apart from each other at a certain interval. For example, the modified reinforcing structure 122 may be formed on the first housing 110 in the same way. For example, the modified reinforcing structure formed on the first housing 110 may include a first sub-reinforcing structure that corresponds to the first arm protrusion disposed on the first arm member 231 and a second sub-reinforcing structure that corresponds to the second arm protrusion and that is spaced apart from the first sub-reinforcing structure at a certain interval. For example, the modified reinforcing structure formed on the second housing 120 may include a third sub-reinforcing structure that corresponds to the third arm protrusion disposed on the second arm member 232 and a fourth sub-reinforcing structure that corresponds to the fourth arm protrusion and that is spaced apart from the third sub-reinforcing structure at a certain interval. The section of the modified reinforcing structure 122 in the z-axis direction may have a shape that is the same as or similar to the shape of the z-axis section of the fourth reinforcing structure 121a described above with reference to FIG. 11.

The above-described modified reinforcing structure 122 may be applied to at least one reinforcing structure among the first to sixth reinforcing structures 111a, 111b, 111c, 121a, 121b, and 121c described above with reference to FIG. 1. For example, the first reinforcing structure 111a disposed at the y-axis edge of the first housing 110 and the fourth reinforcing structure 121a disposed at the y-axis edge of the second housing 120 in FIG. 1 may have the shape of the reinforcing structure in FIG. 11 described above, and the second reinforcing structure 111b of the first housing 110 disposed between the -y-axis and the y-axis and the fifth reinforcing structure 121b of the second housing 120 disposed between the -y-axis and the y-axis may have the shape of the modified reinforcing structure described with reference to FIG. 12. Alternatively, the reinforcing structure (or, the modified reinforcing structure) described with reference to FIG. 11 (or, FIG. 12) may be disposed on the first housing 110 (or, second housing 120), and the modified reinforcing structure (or, the reinforcing structure) described with reference to FIG. 12 (or, FIG. 11) may be disposed on the second housing 120 (or, the first housing 110).

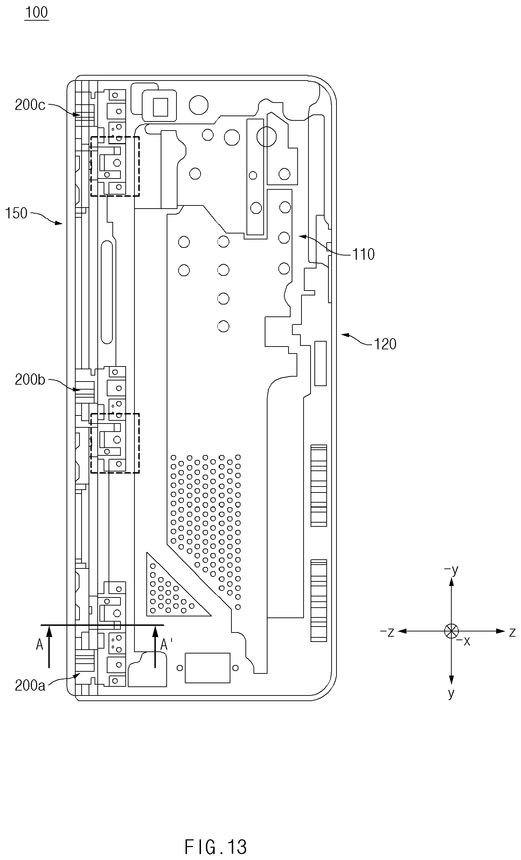

FIG. 13 is a view illustrating an example of a folded state of the foldable electronic device having the hinge structures applied thereto according to an embodiment. In the illustrated drawing, the back cover is removed to facilitate observation of the hinge structures. However, the description of the disclosure is not limited thereto.

Referring to FIGS. 1 to 13, the foldable electronic device 100 may include the first housing 110 and the second housing 120, and the first housing 110 and the second housing 120 may be coupled by the first to third hinge structures 200a, 200b, and 200c. Each of the first to third hinge structures 200a, 200b, and 200c may be at least partially seated on the hinge housing 150. The first housing 110 and the second housing 120 may perform a hinge operation based on the first to third hinge structures 200a, 200b, and 200c. For example, the first housing 110 and the second housing 120 may have a state in which the included angle is equal to 180 degrees. For example, the first housing 110 and the second housing 120 may be disposed side by side based on a plane including the y-axis and may be disposed in an unfolded state when viewed in the -x-axis direction. Correspondingly, the display 160 of FIG. 1, which is at least partially placed on the first housing 110 and the second housing 120, may be arranged in an unfolded state. The foldable electronic device 100 may have a state in which the included angle between the first housing 110 and the second housing 120 is equal to 0 degrees as illustrated in FIG. 13. For example, the first housing 110 and the second housing 120 may be disposed side by side in the z-axis or -z-axis direction and may be stacked in the x-axis direction or the -x-axis direction. As the first housing 110 and the second housing 120 have the folded state, the display 160 described with reference to FIG. 1 may be disposed in a folded state, and the folding region of the display 160 may have a water-drop shape.

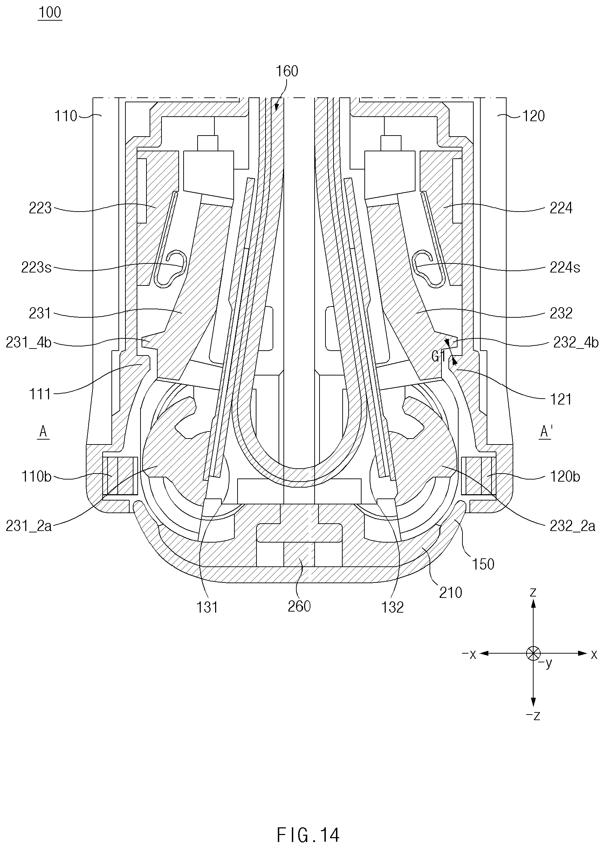

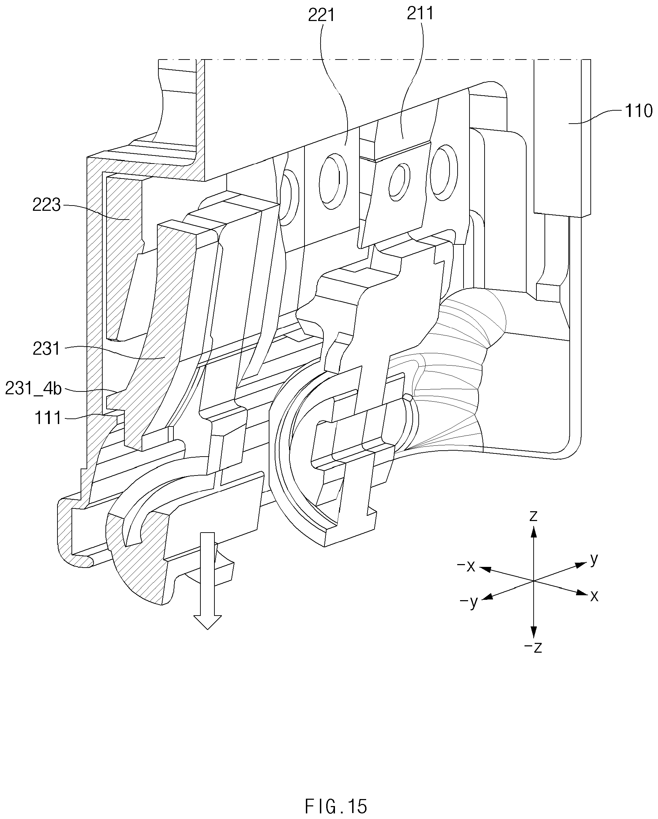

FIG. 14 is a sectional view of one side of the foldable electronic device described in one embodiment of the disclosure (e.g., FIG. 13), where the sectional view is taken along line A-A' in FIG. 13. FIG. 15 is a view illustrating some components of a hinge structure coupled with the first housing among the components of the foldable electronic device illustrated in one embodiment of the disclosure (e.g., FIG. 14). For example, FIG. 15 illustrates a partial configuration of the foldable electronic device including only the first housing 110, the first link member 221 on which the first rotation member 211 is seated, and the third link member 223 on which the first arm member 231 is seated.

Referring to FIGS. 1 to 15, the foldable electronic device 100 may have a folded state. Based on the illustrated drawing, in the folded state of the foldable electronic device 100, the first housing 110 and the second housing 120 may be stacked in the x-axis direction (or, the -x-axis direction) and may be disposed parallel to each other in the z-axis direction (or, the -z-axis direction). When the foldable electronic device 100 is in the folded state and the center of the hinge housing 150 is disposed to face in the z-axis direction in the state in which the back cover of the foldable electronic device 100 is removed, at least a portion of the first housing 110 exposed in the -x-axis direction may have a stepped shape in relation to the seating of the back cover and the arrangement of other structures, and at least a portion of a surface of the second housing 120 exposed in the x-axis direction may have a shape symmetrical to the shape of the first housing 110. A first dust-proof structure 110b may be disposed at one end of the first housing 110 (e.g., an end in the -z-axis direction, an end adjacent to the edge of the hinge housing 150, or at least a portion overlapping the hinge housing 150 when viewed in the z-axis direction in the unfolded state of the foldable electronic device 100), and a second dust-proof structure 120b may be disposed on one region of the second housing 120 symmetrical to the first housing 110 on which the first dust-proof structure 110b is disposed.

While the foldable electronic device 100 is in the folded state, the display 160 may be disposed in a folded state, and at least a portion of the folding part of the display 160 may have a water-drop shape as illustrated. One portion of the folding part of the display 160 may be supported by the first wing plate 131, and an opposite portion of the folding part of the display 160 may be supported by the second wing plate 132. The first wing plate 131 and the second wing plate 132 may be disposed to be symmetrical to each other with respect to the z-axis and may be disposed such that the distance between the first wing plate 131 and the second wing plate 132 is gradually increased (or, decreased) when observed in the direction from the z-axis to the -z-axis (or, in the direction from the -z-axis to the z-axis). The first lower rear part (or, the first lower front part 231_1) may be coupled to one side of the fixed bracket 210, and the second lower rear part 232_2 (or, the second lower front part 232_1) may be coupled to an opposite side of the fixed bracket 210. Accordingly, based on the z-axis direction, the first lower rear part may be disposed to be symmetrical to the second lower rear part 232_2. The interlocking member 260 may be disposed on one side of the central portion of the fixed bracket 210, and the fixed bracket 210 may be seated on one side of the hinge housing 150.

As described above, the first to fourth link members 221, 222, 223, and 224 may be coupled to the first housing 110 and the second housing 120. For example, the first upper rear part 231_4 of the first arm member 231 may be coupled to one side of the third link member 223 coupled to the first housing 110, and the second upper rear part 232_4 of the second arm member 232 may be coupled to one side of the fourth link member 224 coupled to the second housing 120. The first link elastic member 223s may be disposed between the third link member 223 and the first upper rear part 231_4, and the second link elastic member 224s may be disposed between the fourth link member 224 and the second upper rear part 232_4. The first link elastic member 223s may exert an elastic force to push one side of the z-axis upper end of the first upper rear part 231_4 (or, the first upper front part 231_3) in the direction from the -x-axis to the x-axis, and the second link elastic member 224s may exert an elastic force to push one side of the z-axis upper end of the second upper rear part 232_4 (or, the second upper front part 232_3) in the direction from the x-axis to the -x-axis. Accordingly, the first link elastic member 223s and the second link elastic member 224s may help the display 160 to form a water-drop shape.

The second arm protrusion 231_2b (or, the first arm protrusion) protruding in the direction from the x-axis to the -x-axis may be formed on the first upper rear part 231_4 (or, the first upper front part 231_3) of the first arm member 231, and the fourth arm protrusion 232_4b (or, the third arm protrusion 232_4a) protruding in the direction from the x-axis to the -x-axis may be formed on the second upper rear part 232_4 (or, the second upper front part 232_3) of the second arm member 232. When viewed in the direction from the z-axis to the -z-axis (or, when viewed in the direction toward the inside of the hinge housing 150 in the folded state of the foldable electronic device 100), the second arm protrusion 231_2b (or, the first arm protrusion) may be disposed to at least partially overlap a reinforcing structure 111 protruding from one side of the first housing 110 in the direction from the -x-axis to the x-axis. The second arm protrusion 231_2b and the reinforcing structure 111 may be spaced apart from each other in the z-axis direction by a first gap G1. When viewed in the direction from the z-axis to the -z-axis (or, when viewed in the direction toward the inside of the hinge housing 150 in the folded state of the foldable electronic device 100), the fourth arm protrusion 232_4b (or, the third arm protrusion 232_4a) may be disposed to at least partially overlap a reinforcing structure 121 protruding from one side of the second housing 120 in the direction from the x-axis to the -x-axis. The fourth arm protrusion 232_4b and the reinforcing structure 121 may be spaced apart from each other in the z-axis direction by the first gap G1. When the foldable electronic device 100 having the above-described structure falls in the -z-axis direction or external pressure (or, force) is applied to the foldable electronic device 100 in the direction from the -z-axis to the z-axis, the first upper rear part 231_4 may fall in the -z-axis direction. In this process, the second arm protrusion 231_2b disposed between the first lower rear part and the first upper rear part (or, the first arm protrusion disposed between the first lower front part and the first upper front part) may be stopped by the reinforcing structure 111 formed on the first housing 110, and movement of the first arm member 231 in the z-axis direction may be restricted. Similarly, the fourth arm protrusion 232_4b disposed between the second lower rear part and the second upper rear part (or, the third arm protrusion 232_4a disposed between the second lower front part and the second upper front part) may be stopped by the reinforcing structure 121 formed on the second housing 120, and movement of the second arm member 232 in the z-axis direction may be restricted. As the movement of the first arm member 231 and the second arm member 232 is restricted, impulse caused by the movement of the first arm member 231 and the second arm member 232 may not be generated, and thus a dent in the display 160 or deformation of the display 160 may be reduced or prevented.

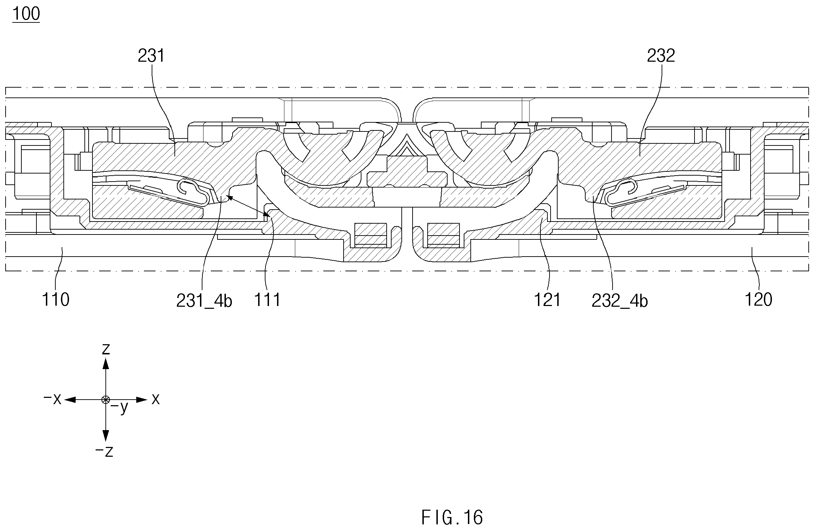

FIG. 16 is a view illustrating an example of a partial section of the foldable electronic device in an unfolded state according to an embodiment. For example, the section illustrated in FIG. 16 may correspond to a state in which the section of the foldable electronic device 100 in the folded state in FIG. 14 is unfolded.

Referring to FIGS. 1 to 16, the foldable electronic device 100 may include the first housing 110 and the second housing 120. The first housing 110 and the second housing 120, when viewed in the z-axis direction, may be disposed in the unfolded state so as to be parallel to the x-y plane. In this case, one surface of the first housing 110 (e.g., the upper surface on which the display 160 is placed) and one surface of the second housing 120 (e.g., the upper surface on which the display 160 is placed) may be disposed to face in the z-axis direction (e.g., the front direction in which the screen of the display 160 is displayed).

When the foldable electronic device 100 is in the unfolded state, the first arm member 231 and the second arm member 232 may be disposed parallel to the display 160 in the unfolded state. Correspondingly, when viewed in the z-axis direction, the arm protrusion (e.g., the first arm protrusion or the second arm protrusion 231_2b) disposed on the first arm member 231 and the reinforcing structure 111 formed on the first housing 110 may be spaced apart from each other by a second gap (e.g., G2) without overlapping each other. When the foldable electronic device 100 is viewed in the z-axis direction in the unfolded state, the arm protrusion (e.g., the third arm protrusion or the fourth arm protrusion 232_4b) disposed on the second arm member 232 and the reinforcing structure 121 formed on the second housing 120 may be spaced apart from each other by the second gap (e.g., G2) without overlapping each other. The gap between the arm protrusions formed on the first arm member 231 and the reinforcing structure 111 may be the same as or similar to the gap between the arm protrusions formed on the second arm member 232 and the reinforcing structure 121. When the foldable electronic device 100 in the unfolded state is observed from another point of view (e.g., when the foldable electronic device 100 is observed in the x-axis or -x-axis direction), the arm protrusions formed on the first arm member 231 and the reinforcing structure 111 may be spaced apart from each other by a third gap without overlapping each other, and the arm protrusions formed on the second arm member 232 and the reinforcing structure 121 may be spaced apart from each other by a fourth gap without overlapping each other. The third gap and the fourth gap may be equal to each other, and depending on the arrangement of mechanical parts, the third gap and the fourth gap may converge to zero (e.g., the arm protrusions and the reinforcing structure may overlap each other).

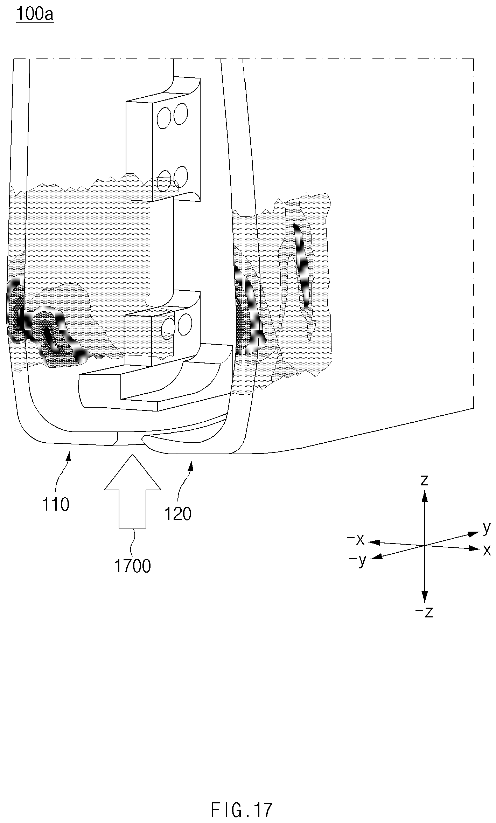

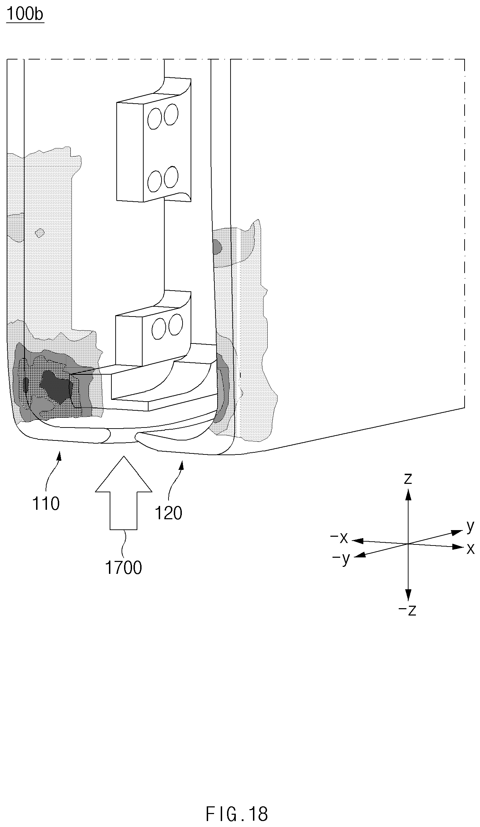

FIG. 17 is a view illustrating an example of deformation of a first foldable electronic device having no reinforcing structure due to impact according to an embodiment, and FIG. 18 is a view illustrating an example of deformation of a second foldable electronic device including a reinforcing structure due to impact according to an embodiment.

Referring to FIGS. 1 to 17, when impact 1700 is applied from the outside to the first foldable electronic device 100a having no reinforcing structure (or, when impact is applied in the direction from the -z-axis to the z-axis or when a region where a hinge housing is disposed collides with the floor while the first foldable electronic device in a folded state falls), a first housing 110 may be bent in the -x-axis direction by a first magnitude (e.g., 0.115) as illustrated. Similarly to the first housing 110, a second housing 120 may also be bent in the x-axis direction by a second magnitude (a magnitude similar to the first magnitude when impact of the same magnitude is applied to the first housing 110 and the second housing 120).

Referring to FIGS. 1 to 18, when impact 1700 is applied from the outside to the second foldable electronic device 100b including the reinforcing structure (or, when impact is applied in the direction from the -z-axis to the z-axis or when a region where a hinge housing is disposed collides with the floor while the second foldable electronic device in a folded state falls), a first housing 110 may be bent in the -x-axis direction by a third magnitude (e.g., 0.064) as illustrated. Similarly to the first housing 110, a second housing 120 may also be bent in the x-axis direction by a fourth magnitude (a magnitude similar to the third magnitude when impact of the same magnitude is applied to the first housing 110 and the second housing 120).

As described above, even though the external impact 1700 occurs, the second foldable electronic device 100b including the reinforcing structure (e.g., the foldable electronic device 100 described above with reference to FIGS. 1 to 16) may be less deformed than the first foldable electronic device 100a having no reinforcing structure. Due to this, components disposed inside the second foldable electronic device 100b may experience less impact or deformation. Meanwhile, in an embodiment of the disclosure, in consideration of a way to reinforce the parts where the housings are bent by the external impact, the foldable electronic device of the disclosure may be configured to include only the reinforcing structures formed on the housings without the arm protrusions provided on the arm members described above, or may be configured to include both the arm protrusions and the reinforcing structures. Furthermore, in at least one embodiment of the foldable electronic device of the disclosure, the second hinge structure 200b disposed at the center may not include a separate arm protrusion structure, and the arm protrusion structures may be applied only to the first and third hinge structures 200a and 200c. Correspondingly (or, independently), the reinforcing structures may be disposed at the opposite edges (e.g., the y-axis edge and the -y-axis edge in FIG. 13) (or, on regions of the housings 110 and 120 that correspond to the regions where the first hinge structure 200a and the third hinge structure 200c are disposed) when the first housing 110 and the second housing 120 are in the folded state. When described based on FIG. 1, the foldable electronic device 100 may include only the first and third reinforcing structures 111a and 111c and the fourth and sixth reinforcing structures 121a and 121c.

Based on a combination of the various embodiments described above or an independent embodiment, a foldable electronic device of the disclosure may include a display, a first housing and a second housing in each of which at least a portion of the display is accommodated, at least one hinge structure that connects the first housing and the second housing, and a hinge housing on which the at least one hinge structure is seated. The at least one hinge structure may include a fixed bracket that is seated on the hinge housing and that includes a first rail and a second rail, a first rotation member including a first rail structure inserted into the first rail and a second rail structure extending from the first rail structure, a second rotation member including a third rail structure inserted into the second rail and a fourth rail structure extending from the third rail structure, a first link member fixed to the first housing and coupled with the first rail structure, a second link member fixed to the second housing and coupled with the third rail structure, a third link member fixed to the first housing and disposed adjacent to the first link member, a fourth link member fixed to the second housing and disposed adjacent to the second link member, a first arm member having one side fastened to one side of the fixed bracket and an opposite side coupled to the third link member, a second arm member having one side fastened to an opposite side of the fixed bracket and an opposite side coupled to the fourth link member, at least one first housing reinforcing structure formed between a region of the first housing on which the hinge housing is seated and a region of the first housing on which one end of the hinge structure is seated, and at least one second housing reinforcing structure formed between a region of the second housing on which the hinge housing is seated and a region of the second housing on which an opposite end of the hinge structure is seated.

According to an embodiment, the first housing reinforcing structure and the second housing reinforcing structure may be disposed to be symmetrical to each other based on a direction toward the hinge housing in a folded state of the first housing and the second housing.

According to an embodiment, the at least one hinge structure may include a plurality of hinge structures disposed in at least two positions between a first edge adjacent to a region where the hinge housing is disposed when the first housing and the second housing are in a folded state and a second edge located on the opposite side to the first edge with respect to a central portion of a folding region of the display.

According to an embodiment, the at least one hinge structure may include a first hinge structure disposed at the first edge and a second hinge structure disposed at the second edge.

According to an embodiment, the first housing reinforcing structure may include a first reinforcing structure disposed at the first edge and a second reinforcing structure disposed at the second edge, and the second housing reinforcing structure may include a third reinforcing structure disposed at the first edge so as to be symmetrical to the first reinforcing structure and a fourth reinforcing structure disposed at the second edge so as to be symmetrical to the second reinforcing structure.

According to an embodiment, the first housing reinforcing structure and the second housing reinforcing structure may be formed such that a length in a first direction in which the display is folded is longer than a length in a direction perpendicular to the first direction.

According to an embodiment, at least a portion of the first housing reinforcing structure and at least a portion of the second housing reinforcing structure may include a curved surface corresponding to a rear surface of the hinge housing.

According to an embodiment, the first arm member may include a first lower front part and a first lower rear part fastened to the fixed bracket, a first upper front part and a first upper rear part fastened to the third link member, and a first arm protrusion that is disposed between the first lower front part and the first upper front part and that protrudes toward an inner surface of the first housing when the first housing and the second housing are in a folded state.

According to an embodiment, the first arm member may further include a second arm protrusion disposed between the first lower rear part and the first upper rear part and disposed side by side with the first arm protrusion while protruding toward the inner surface of the first housing when the first housing and the second housing are in the folded state.

According to an embodiment, the first housing reinforcing structure may include a first sub-reinforcing structure and a second sub-reinforcing structure that correspond to the first arm protrusion and the second arm protrusion, respectively, and that are spaced apart from each other at a certain interval.

According to an embodiment, at least a portion of the first arm protrusion and at least a portion of the second arm protrusion may be disposed to overlap the first housing reinforcing structure when observed in a direction toward the hinge housing in the folded state of the first housing and the second housing.

According to an embodiment, at least a portion of the first arm protrusion and at least a portion of the second arm protrusion may be disposed so as not to overlap the first housing reinforcing structure when observed in a direction toward the hinge housing in an unfolded state of the first housing and the second housing.

According to an embodiment, the first arm protrusion and the second arm protrusion may be formed of the same material as the material of the first housing reinforcing structure.

According to an embodiment, the second arm member may include a second lower front part and a second lower rear part fastened to the fixed bracket, a second upper front part and a second upper rear part fastened to the fourth link member, and a third arm protrusion that is disposed between the second lower front part and the second upper front part and that protrudes toward an inner surface of the second housing when the first housing and the second housing are in a folded state.

According to an embodiment, the second arm member may further include a fourth arm protrusion disposed between the second lower rear part and the second upper rear part and disposed side by side with the third arm protrusion while protruding toward the inner surface of the second housing when the first housing and the second housing are in the folded state.

According to an embodiment, the second housing reinforcing structure may include a third sub-reinforcing structure and a fourth sub-reinforcing structure that correspond to the third arm protrusion and the fourth arm protrusion, respectively, and that are spaced apart from each other at a certain interval.

According to an embodiment, at least a portion of the third arm protrusion and at least a portion of the fourth arm protrusion may be disposed to overlap the second housing reinforcing structure when observed in a direction toward the hinge housing in the folded state of the first housing and the second housing.

According to an embodiment, at least a portion of the third arm protrusion and at least a portion of the fourth arm protrusion may be disposed so as not to overlap the second housing reinforcing structure when observed in a direction toward the hinge housing in an unfolded state of the first housing and the second housing.

According to an embodiment, the third arm protrusion and the fourth arm protrusion may be formed of the same material as the material of the second housing reinforcing structure.

According to an embodiment, the first housing reinforcing structure and the second housing reinforcing structure may have the same structure.

Based on a combination of the various embodiments described above or an independent embodiment, a foldable electronic device of the disclosure may include a display, a first housing and a second housing in each of which at least a portion of the display is accommodated, at least one hinge structure that connects the first housing and the second housing, and a hinge housing on which the at least one hinge structure is seated. The at least one hinge structure may include a fixed bracket, a first rotation member and a second rotation member fastened to one side of the fixed bracket, a first arm member and a second arm member fastened to an opposite side of the fixed bracket, at least one first arm protrusion (or, stopper) protruding from one side of the first arm member toward the inside of the first housing when the foldable electronic device is in a folded state, at least one second arm protrusion (or, stopper) protruding from one side of the second arm member toward the inside of the second housing, a first housing reinforcing structure protruding toward the first arm member from an inner surface of the first housing disposed adjacent to the first arm protrusion, and a second housing reinforcing structure protruding toward the second arm member from an inner surface of the second housing disposed adjacent to the second arm protrusion.

The foldable electronic device may include a first hinge structure 200a and a second hinge structure (e.g., the hinge structure 200c of FIG. 1) that, when the display is in a folded state, are located at opposite edges in a direction in which the display is folded. Alternatively, the foldable electronic device may further include a third hinge structure (e.g., the hinge structure 200b of FIG. 1) between the first hinge structure and the second hinge structure.

A foldable electronic device according to an embodiment of the disclosure may include a display 160, a first housing 110 and a second housing 120 in each of which at least a portion of the display is accommodated, at least one hinge structure 200a fastened with the first housing and the second housing, and a hinge housing 150 to which the at least one hinge structure is adjacent and that includes a first end adjacent to the first housing and a second end adjacent to the second housing. The at least one hinge structure 200a may include a fixed bracket 210 seated on the hinge housing, a first rotation member 211 fastened with the fixed bracket, a first arm member 231, at least a portion of which is fastened to the fixed bracket, at least one first housing reinforcing structure 111a formed on the first housing and disposed between a region adjacent to the first end of the hinge housing and a region to which a first end of the hinge structure is adjacent, and at least one second housing reinforcing structure 121a formed on the second housing and disposed between a region to which the second end of the hinge housing is adjacent and a region to which a second end of the hinge structure is adjacent.

According to an embodiment, the at least one hinge structure may further include a link member 223 fixed to the first housing. The first arm member may be fastened with the link member so as to slide. The first rotation member may be fastened with the link member, and movement of the first rotation member toward the fixed bracket may be restricted by the link member.

According to an embodiment, the first arm member may include an arm protrusion on one surface thereof. When observed in a direction toward the hinge housing in a folded state of the first housing and the second housing, at least a portion of the arm protrusion may be disposed to overlap the first housing reinforcing structure to restrict movement of the first arm member toward the fixed bracket.

According to an embodiment, the first housing reinforcing structure and the second housing reinforcing structure may be disposed to be symmetrical to each other based on a direction toward the hinge housing in a folded state of the first housing and the second housing.

According to an embodiment, the at least one hinge structure may include a plurality of hinge structures disposed in at least two positions between a first edge of the first housing adjacent to a region where the hinge housing is disposed when the first housing and the second housing are in a folded state and a second edge of the first housing located on the opposite side to the first edge with respect to a central portion of a folding region of the display.

According to an embodiment, the at least one hinge structure may include a first hinge structure disposed at the first edge and a second hinge structure disposed at the second edge.

According to an embodiment, the first housing reinforcing structure may include a first reinforcing structure disposed at the first edge and a second reinforcing structure disposed at the second edge, and the second housing reinforcing structure may include a third reinforcing structure disposed at the first edge so as to be symmetrical to the first reinforcing structure and a fourth reinforcing structure disposed at the second edge so as to be symmetrical to the second reinforcing structure.

According to an embodiment, the first housing reinforcing structure and the second housing reinforcing structure may be formed such that a length in a first direction in which the display is folded is longer than a length in a direction perpendicular to the first direction.

According to an embodiment, at least a portion of the first housing reinforcing structure and at least a portion of the second housing reinforcing structure may include a curved surface corresponding to a rear surface of the hinge housing.

According to an embodiment, the at least one hinge structure may further include a link member 223 fixed to the first housing, and the first arm member may include a first lower part fastened to the fixed bracket, a first upper part fastened to the link member 223, and an arm protrusion that is disposed between the first lower part and the first upper part and that protrudes toward an inner surface of the first housing in a folded state of the first housing and the second housing.

According to an embodiment, the first housing reinforcing structure may include a first sub-reinforcing structure and a second sub-reinforcing structure that correspond to the arm protrusion and that are spaced apart from each other at a certain interval.

According to an embodiment, at least a portion of the arm protrusion may be disposed to overlap the first housing reinforcing structure when observed in a direction toward the hinge housing in the folded state of the first housing and the second housing.

According to an embodiment, at least a portion of the arm protrusion may be disposed so as not to overlap the first housing reinforcing structure when observed in the direction toward the hinge housing in an unfolded state of the first housing and the second housing.

According to an embodiment, the arm protrusion may protrude toward the inner surface of the first housing by 0.2 mm to 2.0 mm in the folded state of the first housing and the second housing.

According to an embodiment, the first lower part may include a first lower front part and a first lower rear part, each of which is at least partially fastened to the fixed bracket. The first upper part may include a first upper front part and a first upper rear part, each of which is fastened to the link member. The arm protrusion may include a first arm protrusion that is disposed between the first lower front part and the first upper front part and that protrudes toward the inner surface of the first housing in the folded state of the first housing and the second housing and a second arm protrusion that is disposed between the first lower rear part and the first upper rear part and that protrudes toward the inner surface of the first housing in the folded state of the first housing and the second housing. The first and second arm protrusions may be disposed side by side with each other.

According to an embodiment, the first housing reinforcing structure may include a first sub-reinforcing structure and a second sub-reinforcing structure that correspond to the first arm protrusion and the second arm protrusion, respectively, and that are spaced apart from each other at a certain interval.

According to an embodiment, at least a portion of the first arm protrusion and at least a portion of the second arm protrusion may be disposed to overlap the first housing reinforcing structure when observed in a direction toward the hinge housing in the folded state of the first housing and the second housing.

According to an embodiment, at least a portion of the first arm protrusion and at least a portion of the second arm protrusion may be disposed so as not to overlap the first housing reinforcing structure when observed in a direction toward the hinge housing in an unfolded state of the first housing and the second housing.

According to an embodiment, the first arm protrusion and the second arm protrusion may be formed of the same material as the material of the first housing reinforcing structure.

According to an embodiment, the first arm protrusion and the second arm protrusion may have the same shape.

According to an embodiment, the fixed bracket 210 may include a first rail 210e, and the first rotation member 211 may include a first rail structure 211b inserted into the first rail of the fixed bracket. The fixed bracket and the first rotation member 211 may be fastened with each other as the first rail structure 211b is inserted into the first rail 210e.

According to an embodiment, the first housing reinforcing structure and the second housing reinforcing structure may have the same structure.

According to an embodiment, the foldable electronic device according to the various embodiments disclosed in the disclosure may include a mobile communication electronic device and may be provided as a part of a computer program product related to operation of the mobile communication electronic device. The computer program product may be traded as a product between a seller and a buyer. The computer program product may be distributed in the form of a machine-readable storage medium (e.g., compact disc read only memory (CD-ROM)), or may be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A foldable electronic device comprising:
a display (160);
a first housing (110) and a second housing (120) in each of which at least a portion of the display is accommodated; and
at least one hinge structure (200a), fastened with the first housing (110) and the second housing (120), and disposed within a hinge housing (150),
wherein the at least one hinge structure (200a) rotatably couples the first housing (110) and second housing (120) about the at least one hinge structure (200a) so as to change the foldable electronic device between a folded state and unfolded state, and includes:
a fixed bracket (210) seated on the hinge housing (150); and
a first rotation member (211) rotatably coupled to a first edge of the fixed bracket (150),
a first arm member (231), wherein at least a portion of the first arm member (231) is connected to the first edge of the fixed bracket (150); and
a second rotation member (212) rotatably coupled to a second edge of the fixed bracket, and
a second arm member (232), wherein at least a portion of the second arm member (232) is connected to the second edge of the fixed bracket (210);
wherein the first housing (110) comprises at least one first housing reinforcing structure (111a) formed on a region of the first housing (110) that is adjacent to a first edge of the hinge structure (200a) and
wherein the second housing (120) comprises at least one second housing reinforcing structure (121a) formed on a region of the second housing (120) that is adjacent to a second edge of the hinge structure (200a), and the at least one second housing reinforcing structure (121a) formed opposite to the first housing reinforcing structure (111a) ,and wherein the first arm member (231) includes an arm protrusion on one surface thereof, and
wherein when observed in a direction toward the hinge housing (150) in the folded state of the foldable electronic device (100), at least a portion of the arm protrusion of the first arm member (231) is disposed to overlap the first housing reinforcing structure (111a) to restrict movement of the first arm member toward the fixed bracket (210); and
wherein the second arm member (232) includes an arm protrusion on one surface thereof, and
wherein when observed in the direction toward the hinge housing (150) in the folded state of the foldable electronic device (100), at least a portion of the arm protrusion of the second arm member (232) is disposed to overlap the second housing reinforcing structure (121a) to restrict movement of the second arm member (232) toward the fixed bracket (210).

2. The foldable electronic device of claim 1, wherein a first edge of the hinge housing (150) is adjacent to the first housing (110) and a second edge of the hinge housing (150) is adjacent to the second housing (120).

3. The foldable electronic device of claim 1, wherein the at least one hinge structure (200a) further includes a first link member (221) fixed to the first housing (110),
wherein the first arm member (231) is fastened with the first link member (221) so as to slide, and
wherein the first rotation member (211) is fastened with the first link member (221), and movement of the first rotation member (211) toward the fixed bracket (210) is restricted by the first link member (221).

4. The foldable electronic device (100) of any preceding claim, wherein the first housing reinforcing structure (111a) and the second housing reinforcing structure (121a) are disposed to be symmetrical to each other based on a direction toward the hinge structure (150) in a folded state of the first housing and the second housing

5. The foldable electronic device (100) of any preceding claim, wherein the at least one hinge structure (200a) includes a plurality of hinge structures (200a; 200b; 200c) rotatably coupling the first housing (110) and the second housing (120), wherein the plurality of hinge structures (200a; 200b; 200c) are disposed in at least two positions between the first housing (110) and the second housing (120) adjacent to a region where the hinge housing (150) is disposed when the first housing and the second housing are in a folded state and corresponding to a central portion of a folding region of the display.

6. The foldable electronic device of claim 5, wherein the at least one hinge structure (200a) includes:
a first hinge structure (200a); and
a second hinge structure (200b),
wherein the at least one first housing reinforcing structure (111a) includes a first reinforcing structure (111a) disposed at a first region of the first housing (110) and a second reinforcing structure (111b) disposed at a second region of the first housing 110), and
wherein the at least one second housing reinforcing structure of the second housing (120) includes a third reinforcing structure (121a) disposed at the first region of the second housing (120) so as to be symmetrical to the first reinforcing structure (111a) and a fourth reinforcing structure (121b) disposed at the second region of the second housing (120) so as to be symmetrical to the second reinforcing structure (111b).

7. The foldable electronic device of any preceding claim, wherein the first housing reinforcing structure and the second housing reinforcing structure are formed such that a length of each of the first housing reinforcing structure (111a) and the second housing reinforcing structure (121a) in a first direction in which the display is folded is longer than a length in a direction perpendicular to the first direction.

8. The foldable electronic device of any preceding claim, wherein the at least one hinge structure (200a) further includes a link member (223) fixed to the first housing (110), and
wherein the first arm member (231) includes:
a first lower part fastened to the fixed bracket (210);
a first upper part fastened to the link member (223); and
the arm protrusion of the first arm member disposed between the first lower part and the first upper part and configured to protrude toward an inner surface of the first housing (110) in a folded state of the first housing (110) and the second housing (120).

9. The foldable electronic device of claim 8, wherein the first housing reinforcing structure (111a) includes a first sub-reinforcing structure and a second sub-reinforcing structure configured to correspond to the arm protrusion of the first arm member and spaced apart from each other at a certain interval.

10. The foldable electronic device of claim 8 or 9,
wherein at least a portion of the arm protrusion of the first arm member is disposed so as not to overlap the first housing reinforcing structure when observed in the direction toward the hinge housing (150) in an unfolded state of the first housing (110) and the second housing (120), and
wherein at least a portion of the arm protrusion of the second arm member is disposed so as not to overlap the second housing reinforcing structure when observed in the direction toward the hinge housing (150) in an unfolded state of the first housing (110) and the second housing (120).

11. The foldable electronic device of claim 8, 9 or 10, wherein the first lower part includes a first lower front part (231_1) and a first lower rear part, each of which is at least partially fastened to the fixed bracket (210),
wherein the first upper part includes a first upper front part (231_3) and a first upper rear part (231_4), each of which is fastened to the link member (221),
wherein the arm protrusion of the first arm member includes:
a first arm protrusion disposed between the first lower front part (231_1) and the first upper front part (231_4) and configured to protrude toward the inner surface of the first housing (110) in the folded state of the first housing (110) and the second housing (120); and
a second arm protrusion disposed between the first lower rear part and the first upper rear part and configured to protrude toward the inner surface of the first housing in the folded state of the first housing and the second housing, and
wherein the first and second arm protrusions are disposed side by side with each other.

12. The foldable electronic device of claim 11, wherein the first housing reinforcing structure includes a first sub-reinforcing structure and a second sub-reinforcing structure configured to correspond to the first arm protrusion and the second arm protrusion, respectively, and spaced apart from each other at a certain interval.

13. The foldable electronic device of claim 11 or 12, wherein at least a portion of the first arm protrusion and at least a portion of the second arm protrusion are disposed to overlap the first housing reinforcing structure (111a) when observed in a direction toward the hinge housing in the folded state of the first housing (110) and the second housing (120), and,
wherein at least a portion of the first arm protrusion and at least a portion of the second arm protrusion are disposed so as not to overlap the first housing reinforcing structure (111a) when observed in a direction toward the hinge housing in an unfolded state of the first housing (110) and the second housing (120).

## Patentansprüche

1. Klappbare elektronische Vorrichtung, umfassend:
eine Anzeige (160);
ein erstes Gehäuse (110) und ein zweites Gehäuse (120), in denen jeweils zumindest ein Abschnitt der Anzeige untergebracht ist; und
zumindest eine Scharnierstruktur (200a), die mit dem ersten Gehäuse (110) und dem zweiten Gehäuse (120) befestigt und innerhalb eines Scharniergehäuses (150) angeordnet ist,
wobei die zumindest eine Scharnierstruktur (200a) das erste Gehäuse (110) und das zweite Gehäuse (120) drehbar um die zumindest eine Scharnierstruktur (200a) koppelt, um die klappbare elektronische Vorrichtung zwischen einem zusammengeklappten Zustand und einem aufgeklappten Zustand zu ändern, und Folgendes beinhaltet:
eine fixierte Halterung (210), die auf dem Scharniergehäuse (150) sitzt; und
ein erstes Drehelement (211), das drehbar an eine erste Kante der fixierten Halterung (150) gekoppelt ist,
ein erstes Armelement (231), wobei zumindest ein Abschnitt des ersten Armelements (231) mit der ersten Kante der fixierten Halterung (150) verbunden ist; und
ein zweites Drehelement (212), das drehbar an eine zweite Kante der fixierten Halterung gekoppelt ist, und
ein zweites Armelement (232), wobei zumindest ein Abschnitt des zweiten Armelements (232) mit der zweiten Kante der fixierten Halterung (210) verbunden ist;
wobei das erste Gehäuse (110) zumindest eine erste Gehäuseverstärkungsstruktur (111a) umfasst, die an einer Region des ersten Gehäuses (110) gebildet ist, die benachbart zu einer ersten Kante der Scharnierstruktur (200a) ist, und
wobei das zweite Gehäuse (120) zumindest eine zweite Gehäuseverstärkungsstruktur (121a) umfasst, die an einer Region des zweiten Gehäuses (120) gebildet ist, die benachbart zu einer zweiten Kante der Scharnierstruktur (200a) ist, und die zumindest eine zweite Gehäuseverstärkungsstruktur (121a) gegenüber der ersten Gehäuseverstärkungsstruktur (111a) gebildet ist, und wobei das erste Armelement (231) einen Armvorsprung an einer Oberfläche davon beinhaltet, und
wobei, wenn in einer Richtung zu dem Scharniergehäuse (150) in dem zusammengeklappten Zustand der klappbaren elektronischen Vorrichtung (100) betrachtet, zumindest ein Abschnitt des Armvorsprungs des ersten Armelements (231) angeordnet ist, um die erste Gehäuseverstärkungsstruktur (111a) zu überlappen, um Bewegung des ersten Armelements zu der fixierten Halterung (210) zu beschränken; und
wobei das zweite Armelement (232) einen Armvorsprung auf einer Oberfläche davon beinhaltet, und
wobei, wenn in der Richtung zu dem Scharniergehäuse (150) in dem zusammengeklappten Zustand der klappbaren elektronischen Vorrichtung (100) betrachtet, zumindest ein Abschnitt des Armvorsprungs des zweiten Armelements (232) angeordnet ist, um die zweite Gehäuseverstärkungsstruktur (121a) zu überlappen, um Bewegung des zweiten Armelements (232) zu der fixierten Halterung (210) zu beschränken.

2. Klappbare elektronische Vorrichtung nach Anspruch 1, wobei eine erste Kante des Scharniergehäuses (150) benachbart zu dem ersten Gehäuse (110) ist und eine zweite Kante des Scharniergehäuses (150) benachbart zu dem zweiten Gehäuse (120) ist.

3. Klappbare elektronische Vorrichtung nach Anspruch 1, wobei die zumindest eine Scharnierstruktur (200a) ferner ein erstes Verknüpfungselement (221) beinhaltet, das an dem ersten Gehäuse (110) fixiert ist,
wobei das erste Armelement (231) mit dem ersten Verknüpfungselement (221) befestigt ist, um zu gleiten, und
wobei das erste Drehelement (211) mit dem ersten Verknüpfungselement (221) befestigt ist und Bewegung des ersten Drehelements (211) zu der fixierten Halterung (210) durch das erste Verknüpfungselement (221) beschränkt ist.

4. Klappbare elektronische Vorrichtung (100) nach einem vorhergehenden Anspruch, wobei die erste Gehäuseverstärkungsstruktur (111a) und die zweite Gehäuseverstärkungsstruktur (121a) angeordnet sind, um symmetrisch zueinander zu sein, basierend auf einer Richtung zu der Scharnierstruktur (150) in einem zusammengeklappten Zustand des ersten Gehäuses und des zweiten Gehäuses.

5. Klappbare elektronische Vorrichtung (100) nach einem vorhergehenden Anspruch, wobei die zumindest eine Scharnierstruktur (200a) eine Vielzahl von Scharnierstrukturen (200a; 200b; 200c) beinhaltet, die das erste Gehäuse (110) und das zweite Gehäuse (120) drehbar koppelt, wobei die Vielzahl von Scharnierstrukturen (200a; 200b; 200c) in zumindest zwei Positionen zwischen dem ersten Gehäuse (110) und dem zweiten Gehäuse (120) benachbart zu einer Region angeordnet ist, in der das Scharniergehäuse (150) angeordnet ist, wenn das erste Gehäuse und das zweite Gehäuse in einem zusammengeklappten Zustand sind und einem zentralen Abschnitt einer Klappregion der Anzeige entsprechen.

6. Klappbare elektronische Vorrichtung nach Anspruch 5, wobei die zumindest eine Scharnierstruktur (200a) Folgendes beinhaltet:
eine erste Scharnierstruktur (200a); und
eine zweite Scharnierstruktur (200b),
wobei die zumindest eine erste Gehäuseverstärkungsstruktur (111a) eine erste Verstärkungsstruktur (111a), die an einer ersten Region des ersten Gehäuses (110) angeordnet ist, und eine zweite Verstärkungsstruktur (111b), die an einer zweiten Region des ersten Gehäuses (110) angeordnet ist, beinhaltet, und
wobei die zumindest eine zweite Gehäuseverstärkungsstruktur des zweiten Gehäuses (120) eine dritte Verstärkungsstruktur (121a), die an der ersten Region des zweiten Gehäuses (120) angeordnet ist, um symmetrisch zu der ersten Verstärkungsstruktur (111a) zu sein, und eine vierte Verstärkungsstruktur (121b), die an der zweiten Region des zweiten Gehäuses (120) angeordnet ist, um symmetrisch zu der zweiten Verstärkungsstruktur (111b) zu sein, beinhaltet.

7. Klappbare elektronische Vorrichtung nach einem vorhergehenden Anspruch, wobei die erste Gehäuseverstärkungsstruktur und die zweite Gehäuseverstärkungsstruktur gebildet sind, sodass eine Länge von jeder von der ersten Gehäuseverstärkungsstruktur (111a) und der zweiten Gehäuseverstärkungsstruktur (121a) in einer ersten Richtung, in der die Anzeige zusammengeklappt ist, länger als eine Länge in einer Richtung senkrecht zu der ersten Richtung ist.

8. Klappbare elektronische Vorrichtung nach einem vorhergehenden Anspruch, wobei die zumindest eine Scharnierstruktur (200a) ferner ein Verknüpfungselement (223) beinhaltet, das an dem ersten Gehäuse (110) fixiert ist, und
wobei das erste Armelement (231) Folgendes beinhaltet:
ein erstes unteres Teil, das an der fixierten Halterung (210) befestigt ist;
ein erstes oberes Teil, das an dem Verknüpfungselement (223) befestigt ist; und
der Armvorsprung des ersten Armelements zwischen dem ersten unteren Teil und dem ersten oberen Teil angeordnet und dazu konfiguriert ist, zu einer Innenoberfläche des ersten Gehäuses (110) in einem zusammengeklappten Zustand des ersten Gehäuses (110) und des zweiten Gehäuses (120) vorzuspringen.

9. Klappbare elektronische Vorrichtung nach Anspruch 8, wobei die erste Gehäuseverstärkungsstruktur (111a) eine erste Teilverstärkungsstruktur und eine zweite Teilverstärkungsstruktur beinhaltet, die dazu konfiguriert sind, dem Armvorsprung des ersten Armelements zu entsprechen und in einem bestimmten Intervall voneinander beabstandet sind.

10. Klappbare elektronische Vorrichtung nach Anspruch 8 oder 9,
wobei zumindest ein Abschnitt des Armvorsprungs des ersten Armelements angeordnet ist, um die erste Gehäuseverstärkungsstruktur nicht zu überlappen, wenn in der Richtung zu dem Scharniergehäuse (150) in einem aufgeklappten Zustand des ersten Gehäuses (110) und des zweiten Gehäuses (120) betrachtet, und
wobei zumindest ein Abschnitt des Armvorsprungs des zweiten Armelements angeordnet ist, um die zweite Gehäuseverstärkungsstruktur nicht zu überlappen, wenn in der Richtung zu dem Scharniergehäuse (150) in einem aufgeklappten Zustand des ersten Gehäuses (110) und des zweiten Gehäuses (120) betrachtet.

11. Klappbare elektronische Vorrichtung nach Anspruch 8, 9 oder 10, wobei das erste untere Teil ein erstes unteres vorderes Teil (231_1) und ein erstes unteres hinteres Teil beinhaltet, von denen jedes zumindest teilweise an der fixierten Halterung (210) befestigt ist,
wobei das erste obere Teil ein erstes oberes vorderes Teil (231_3) und ein erstes oberes hinteres Teil (231_4) beinhaltet, von denen jedes an dem Verknüpfungselement (221) befestigt ist,
wobei der Armvorsprung des ersten Armelements Folgendes beinhaltet:
einen ersten Armvorsprung, der zwischen dem ersten unteren vorderen Teil (231_1) und dem ersten oberen vorderen Teil (231_4) angeordnet und dazu konfiguriert ist, zu der Innenoberfläche des ersten Gehäuses (110) in dem zusammengeklappten Zustand des ersten Gehäuses (110) und des zweiten Gehäuses (120) vorzuspringen; und
einen zweiten Armvorsprung, der zwischen dem ersten unteren hinteren Teil und dem ersten oberen hinteren Teil angeordnet und dazu konfiguriert ist, zu der Innenoberfläche des ersten Gehäuses in dem zusammengeklappten Zustand des ersten Gehäuses und des zweiten Gehäuses vorzuspringen, und
wobei der erste und der zweite Armvorsprung Seite an Seite zueinander angeordnet sind.

12. Klappbare elektronische Vorrichtung nach Anspruch 11, wobei die erste Gehäuseverstärkungsstruktur eine erste Teilverstärkungsstruktur und eine zweite Teilverstärkungsstruktur beinhaltet, die dazu konfiguriert sind, jeweils dem ersten Armvorsprung und dem zweiten Armvorsprung zu entsprechen und in einem bestimmten Intervall voneinander beabstandet sind.

13. Klappbare elektronische Vorrichtung nach Anspruch 11 oder 12, wobei zumindest ein Abschnitt des ersten Armvorsprungs und zumindest ein Abschnitt des zweiten Armvorsprungs angeordnet sind, um die erste Gehäuseverstärkungsstruktur (111a) zu überlappen, wenn in einer Richtung zu dem Scharniergehäuse in dem zusammengeklappten Zustand des ersten Gehäuses (110) und des zweiten Gehäuses (120) betrachtet, und
wobei zumindest ein Abschnitt des ersten Armvorsprungs und zumindest ein Abschnitt des zweiten Armvorsprungs angeordnet sind, um die erste Gehäuseverstärkungsstruktur (111a) nicht zu überlappen, wenn in einer Richtung zu dem zweiten Scharniergehäuse in einem aufgeklappten Zustand des ersten Gehäuses (110) und des zweiten Gehäuses (120) betrachtet.

## Revendications

1. Dispositif électronique pliable, comprenant :
un afficheur (160) ;
un premier boîtier (110) et un second boîtier (120) dans chacun desquels au moins une partie de l'afficheur est reçu ; et
au moins une structure de charnière (200a), fixée au premier boîtier (110) et au second boîtier (120), et disposée à l'intérieur d'un boîtier de charnière (150),
ladite au moins une structure de charnière (200a) couplant de manière rotative le premier boîtier (110) et le second boîtier (120) autour de la au moins une structure de charnière (200a) de façon à changer le dispositif électronique pliable entre un état plié et un état déplié, et comprenant :
un support fixe (210) logé sur le boîtier de charnière (150) ; et
un premier élément de rotation (211) couplé rotatif à un premier bord du support fixe (150),
un premier élément bras (231), au moins une partie du premier élément bras (231) étant reliée au premier bord du support fixe (150) ; et
un second élément de rotation (212) couplé rotatif à un second bord du support fixe, et
un second élément bras (232), au moins une partie du second élément bras (232) étant reliée au second bord du support fixe (210) ;
ledit premier boîtier (110) comprenant au moins une première structure de renforcement (111a) de boîtier formée sur une zone du premier boîtier (110) qui est adjacente à un premier bord de la structure de charnière (200a) et
ledit second boîtier (120) comprenant au moins une deuxième structure de renforcement (121a) de boîtier formée sur une zone du second boîtier (120) qui est adjacente à un second bord de la structure de charnière (200a), et ladite au moins une deuxième structure de renforcement (121a) de boîtier formée à l'opposé de la première structure de renforcement (111a) de boîtier, et ledit premier élément bras (231) comprenant une saillie de bras sur une surface de celui-ci, et
lorsqu'il est observé dans une direction vers le boîtier de charnière (150) dans l'état plié du dispositif électronique pliable (100), au moins une partie de la saillie de bras du premier élément bras (231) étant disposée pour chevaucher la première structure de renforcement (111a) de boîtier pour limiter le mouvement du premier élément bras vers le support fixe (210) ; et
ledit second élément bras (232) comprenant une saillie de bras sur une surface de celui-ci, et
lorsqu'il est observé dans la direction vers le boîtier de charnière (150) dans l'état plié du dispositif électronique pliable (100), au moins une partie de la saillie de bras du
second élément bras (232) étant disposée pour chevaucher la deuxième structure de renforcement (121a) de boîtier afin de limiter le mouvement du second élément bras (232) vers le support fixe (210).

2. Dispositif électronique pliable de la revendication 1, un premier bord du boîtier de charnière (150) étant adjacent au premier boîtier (110) et un second bord du boîtier de charnière (150) étant adjacent au second boîtier (120).

3. Dispositif électronique pliable de la revendication 1, ladite au moins une structure de charnière (200a) comprenant en outre un premier élément de liaison (221) fixé au premier boîtier (110), ledit premier élément bras (231) étant fixé au premier élément de liaison (221) de façon à coulisser, et
ledit premier élément de rotation (211) étant fixé au premier élément de liaison (221), et un mouvement du premier élément de rotation (211) vers le support fixe (210) étant limité par le premier élément de liaison (221).

4. Dispositif électronique pliable (100) d'une quelconque revendication précédente, ladite première structure de renforcement (111a) de boîtier et ladite deuxième structure de renforcement (121a) de boîtier étant disposées pour être symétriques l'une par rapport à l'autre sur la base d'une direction vers la structure de charnière (150) dans un état plié du premier boîtier et du second boîtier.

5. Dispositif électronique pliable (100) d'une quelconque revendication précédente, ladite au moins une structure de charnière (200a) comprenant une pluralité de structures de charnière (200a ; 200b ; 200c) couplant de manière rotative le premier boîtier (110) et le second boîtier (120), ladite pluralité de structures de charnière (200a ; 200b ; 200c) étant disposées dans au moins deux positions entre le premier boîtier (110) et le second boîtier (120) adjacentes à une zone où le boîtier de charnière (150) est disposé lorsque le premier boîtier et le second boîtier sont dans un état plié et correspondant à une partie centrale d'une zone pliable de l'afficheur.

6. Dispositif électronique pliable de la revendication 5, ladite au moins une structure de charnière (200a) comprenant :
une première structure de charnière (200a) ; et
une seconde structure de charnière (200b),
ladite au moins une première structure de renforcement (111a) de boîtier comprenant une première structure de renforcement (111a) disposée au niveau d'une première zone du premier boîtier (110) et une seconde structure de renforcement (111b) disposée au niveau d'une seconde zone du premier boîtier 110), et
ladite au moins une deuxième structure de renforcement de boîtier du second boîtier (120) comprenant une troisième structure de renforcement (121a) disposée au niveau de la première zone du second boîtier (120) de façon à être symétrique par rapport à la première structure de renforcement (111a) et une quatrième
structure de renforcement (121b) disposée au niveau de la seconde zone du second boîtier (120) de façon à être symétrique par rapport à la deuxième structure de renforcement (111b).

7. Dispositif électronique pliable d'une quelconque revendication précédente, ladite première structure de renforcement de boîtier et ladite seconde structure de renforcement de boîtier étant formées de sorte qu'une longueur de chacune de la première structure de renforcement (111a) de boîtier et de la deuxième structure de renforcement de boîtier (121a) dans une première direction dans laquelle l'afficheur est plié soit plus longue qu'une longueur dans une direction perpendiculaire à la première direction.

8. Dispositif électronique pliable d'une quelconque revendication précédente, ladite au moins une structure de charnière (200a) comprenant en outre un élément de liaison (223) fixé au premier boîtier (110), et
ledit premier élément bras (231) comprenant :
une première partie inférieure fixée au support fixe (210) ;
une première partie supérieure fixée à l'élément de liaison (223) ; et
la saillie de bras du premier élément bras disposé entre la première partie inférieure et la première partie supérieure et conçue pour faire saillie vers une surface interne du premier boîtier (110) dans un état plié du premier boîtier (110) et du second boîtier (120).

9. Dispositif électronique pliable de la revendication 8, ladite première structure de renforcement (111a) de boîtier comprenant une première structure de sous-renforcement et une seconde structure de sous-renforcement conçues pour correspondre à la saillie de bras du premier élément bras et espacées l'une de l'autre à un certain intervalle.

10. Dispositif électronique pliable selon la revendication 8 ou 9,
au moins une partie de la saillie de bras du premier élément bras étant disposée de façon à ne pas chevaucher la première structure de renforcement de boîtier lorsqu'elle est observée dans la direction vers le boîtier de charnière (150) dans un état déplié du premier boîtier (110) et du second boîtier (120), et
au moins une partie de la saillie de bras du second élément bras étant disposée de façon à ne pas chevaucher la deuxième structure de renforcement de boîtier lorsqu'elle est observée dans la direction vers le boîtier de charnière (150) dans un état déplié du premier boîtier (110) et du second boîtier (120).

11. Dispositif électronique pliable de la revendication 8, 9 ou 10, ladite première partie inférieure comprenant une première partie avant inférieure (231_1) et une première partie arrière inférieure, chacune d'elles étant au moins partiellement fixée au support fixe (210),
ladite première partie supérieure comprenant une première partie avant supérieure (231_3) et une première partie arrière supérieure (231_4), chacune d'elles étant fixée à l'élément de liaison (221),
ladite saillie de bras du premier élément bras comprenant :
une première saillie de bras disposée entre la première partie avant inférieure (231_1) et la première partie avant supérieure (231_4) et conçue pour faire saillie vers la surface interne du premier boîtier (110) dans l'état plié du premier boîtier (110) et du second boîtier (120) ; et une seconde saillie de bras disposée entre la première partie arrière inférieure et la première partie arrière supérieure et conçue pour faire saillie vers la surface interne du premier boîtier dans l'état plié du premier boîtier et du second boîtier, et
lesdites première et seconde saillies de bras étant disposées côte à côte l'une avec l'autre.

12. Dispositif électronique pliable de la revendication 11, ladite première structure de renforcement de boîtier comprenant une première structure de sous-renforcement et une seconde structure de sous-renforcement conçues pour correspondre respectivement à la première saillie de bras et à la seconde saillie de bras et espacées l'une de l'autre à un certain intervalle.

13. Dispositif électronique pliable de la revendication 11 ou 12, au moins une partie de la première saillie de bras et au moins une partie de la seconde saillie de bras étant disposées pour chevaucher la première structure de renforcement (111a) de boîtier lorsqu'elles sont observées dans une direction vers le boîtier de charnière dans l'état plié du premier boîtier (110) et du second boîtier (120), et, au moins une partie de la première saillie de bras et au moins une partie de la seconde saillie de bras étant disposées de façon à ne pas chevaucher la première structure de renforcement (111a) de boîtier lorsqu'elles sont observées dans une direction vers le boîtier de charnière dans un état déplié du premier boîtier (110) et du second boîtier (120).
